(19) **Europäisches Patentamt / European Patent Office / Office européen des brevets**

(11) **EP 3 440 827 B1**

(12) **FASCICULE DE BREVET EUROPEEN**

(45) Date de publication et mention de la délivrance du brevet:
**30.03.2022 Bulletin 2022/13**

(21) Numéro de dépôt: **17715192.5**

(22) Date de dépôt: **07.04.2017**

(51) Classification Internationale des Brevets (IPC):
**H04N 1/00** *(2006.01)* **H04N 1/38** *(2006.01)*

(52) Classification Coopérative des Brevets (CPC):
**H04N 1/38; H04N 1/00803**

(86) Numéro de dépôt international:
**PCT/EP2017/058370**

(87) Numéro de publication internationale:
**WO 2017/174778 (12.10.2017 Gazette 2017/41)**

(54) **PROCEDE ET SYSTEME DE SEPARATION DE DOCUMENTS LORS D'UNE NUMERISATION PAR LOT**

VERFAHREN UND SYSTEM ZUM VEREINZELN VON DOKUMENTEN WÄHREND DER CHARGENDIGITALISIERUNG

METHOD AND SYSTEM FOR SEPARATING DOCUMENTS DURING BATCH DIGITIZATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.04.2016 FR 1653155**

(43) Date de publication de la demande:
**13.02.2019 Bulletin 2019/07**

(73) Titulaire: **SAS Sages Informatique**
**20167 AFA (FR)**

(72) Inventeurs:
• **DONZEL, Mathieu**
**20167 Villanova (FR)**

• **MONTESSINO, Jean**
**20090 Ajaccio (FR)**
• **MARIN, Laetitia**
**20000 Ajaccio (FR)**

(74) Mandataire: **Nicolle, Olivier**
**Liberta IP**
**La Punta Porto Pollo**
**20140 Serra di Ferro (FR)**

(56) Documents cités:
**EP-A2- 0 929 176     US-A- 4 757 348**
**US-A- 6 118 544     US-A1- 2003 193 682**

**Description**

La présente invention concerne le domaine de la numérisation et de la gestion électronique de documents (GED).

La gestion électronique de documents a très souvent à traiter le cas de la dématérialisation de documents physiques. Ces derniers, généralement sous forme de feuilles de papier contenant des informations écrites ou graphiques, doivent être numérisés afin de construire des représentations numériques des informations contenues sur les supports physiques constituant lesdits documents. La représentation numérique d'un document physique donné doit être cohérente et complète et, subséquemment, doit contenir une représentation numérique de chacune des pages dudit document, ainsi que toutes les représentations numériques des pages dudit document et ne doit pas contenir de représentation numérique de pages issues d'un autre document.

La dématérialisation de documents physiques est généralement effectuée au moyen d'un dispositif de numérisation usuellement appelé scanner de documents. Quand il existe une grande quantité de feuilles à numériser, il est courant d'utiliser un dispositif nommé chargeur de document, prévu pour que le scanner puisse numériser successivement plusieurs feuilles. Un tel chargeur de documents peut traiter des feuilles issues d'un lot contenant plusieurs documents, ce qui permet de minimiser les interactions humaines nécessaires à la numérisation de plusieurs documents : l'opérateur humain place un lot de documents à numériser dans le chargeur de documents, enclenche le processus de numérisation et toutes les pages qui constituent les documents du lot sont alors numérisées sans que soit nécessaire aucune interaction humaine supplémentaire. Afin de pouvoir gérer les documents d'un même lot ainsi numérisés, il est requis de pouvoir déterminer les pages numérisées représentant les premières ou dernières feuilles de chaque document, de façon à pouvoir traiter comme un seul document numérisé les ensembles de pages numérisées correspondant à un même document. En d'autres termes, il est nécessaire de pouvoir séparer les documents d'un même lot de façon à obtenir, pour un lot contenant N documents physiques, N représentations numériques desdits N documents physiques.

A fortiori, il est assez peu efficace de numériser les documents un par un, et les solutions de GED sont généralement prévues pour permettre aux utilisateurs de numériser plusieurs documents en même temps, et de traiter le résultat de la numérisation de façon à ce qu'il y ait autant de documents numériques qu'il y avait de documents physiques.

Qui plus est, cette contrainte existe aussi lorsqu'un lot de documents est généré sous forme numérisé par un logiciel, par exemple lorsque de multiples factures clients ou feuilles de paie sont générées sous forme numérique en une seule fois et dans un seul fichier informatique contenant, de fait, plusieurs documents distincts dans un même fichier numérique.

Certaines solutions peuvent nécessiter l'emploi d'un dispositif spécifique de numérisation et/ou de chargement de documents à numériser. Par exemple un chargeur de document qui embarque un dispositif mécanique prévu pour détecter une coche ou une performation dans une feuille. Ou encore un dispositif de numérisation détectant la présence d'un métal particulier sur une page. Le dispositif est alors construit pour envoyer un signal au système de numérisation lorsqu'il est mis en présence d'une page dont les caractéristiques physiques ou mécaniques répondent aux critères de détection. Les premières ou dernières pages doivent alors être modifiées de façon à déclencher la détection par le dispositif en question.

L'acquisition par l'utilisateur d'un dispositif spécifique de chargement de document ou de numérisation a été exclue d'emblée des solutions souhaitables dans le cadre de l'invention. L'invention doit être telle que la séparation de documents d'un même lot puisse s'effectuer avec des dispositifs de numérisation et de chargement de pages standard et existants, et sans nécessiter de modification des systèmes mis en œuvre pour la numérisation de lots de documents.

Les solutions connues qui ne nécessitent pas de dispositifs spécifiques de numérisation ni de chargement de pages utilisent généralement la détection, après numérisation de la page, d'un élément prévu pour avoir la signification de marque de séparation de document. Cette détection est effectuée par analyse des pages numérisées en utilisant des algorithmes de reconnaissance par exemple de formes ou de caractères.

Parmi les solutions connues pour la séparation d'un lot de documents numériques, on trouve :

- La séparation en nombre de pages : cette solution consiste à séparer les documents d'un même lot en considérant que chaque document du lot contient le même nombre de pages numérisées. Elle n'a de véritable intérêt qu'avec les lots qui contiennent des documents dont le nombre de pages est strictement le même d'un document à l'autre, en particulier les documents qui ne comprennent qu'une feuille (donc une ou deux pages selon qu'ils sont imprimés sur leur recto uniquement ou recto-verso).
- Les séparateurs : cette solution telle qu'illustrée par le document US6118544 consiste à détecter une page bien spécifique, usuellement nommée « séparateur » ou « patch », entre chaque document, ledit séparateur contenant des marqueurs facilement reconnaissables dans une page numérisée. Cette solution a l'inconvénient de requérir l'impression ou la fourniture desdits séparateurs puis une manipulation consistant à insérer lesdits séparateurs à l'endroit idoine avant numérisation. En outre, il est généralement nécessaire d'enlever ensuite lesdits séparateurs, par exemple pour pouvoir les réutiliser avec un autre lot ou afin d'archiver les documents du lot (voire le lot lui-même) sans ajout de pages qui ne s'y trouvaient pas initialement.

- Page blanche : C'est une variante simpliste de la solution utilisant des séparateurs, consistant à insérer une page blanche entre chaque document d'un même lot. Cette solution est un peu plus légère en termes de manipulation, car il n'y a pas besoin d'imprimer ni de fournir quoi que ce soit de spécifique outre un stock de feuilles vierges, mais la solution a plusieurs inconvénients majeurs :

  ◦ Détection erronée de séparation si un des documents contient une page blanche ou quasi-blanche.
  ◦ Différence de traitement selon que la numérisation est effectuée sur le recto des feuilles ou recto-verso : la détection d'une page blanche dans le cas d'une numérisation d'un lot de documents numérisés sur leur recto et leur verso est effective lorsque sont détectées au moins deux pages blanches consécutives alors que, dans le cas d'une numérisation d'un lot de documents numérisés seulement sur leur recto, la détection d'une page blanche est effective lorsqu'est détectée une page blanche. Par ailleurs, il est toujours un peu hasardeux de détecter une page « blanche » car elles ne sont jamais réellement blanches après numérisation.

- Reconnaissances optiques d'objets connus a priori. Cette catégorie comprend les solutions utilisant la détection de la présence d'un élément particulier sur la première ou la dernière page d'un document, telles que divulguées par le document EP0929176. Cette détection est effectuée sur des pages numérisées par l'application d'un algorithme de reconnaissance. Parmi ces solutions, on peut notamment citer :

  o Détection de la présence d'un mot ou d'une chaine de caractère, éventuellement dans une zone particulière : cela consiste en la détection d'une suite de caractères sur la première page (respectivement la dernière page) de chaque document. A chaque fois que ladite chaine de caractères est détectée, la page est considérée être la première page (respectivement la dernière page) d'un nouveau document. La reconnaissance de caractères se fait en utilisant une méthode de reconnaissance optique de caractères (ROC ou OCR en anglais). Il est donc nécessaire que la chaîne de caractères à reconnaitre soit présente sur les pages idoines, ce qui implique de l'y ajouter si elle n'y est pas déjà présente et détectable. Cela peut se faire lors de la génération ou de l'impression du document, ce qui implique de prévoir la chose a priori Il est aussi possible de sur-imprimer ladite chaîne de caractères à reconnaître, contraignant alors l'utilisateur à insérer les pages idoines dans un dispositif prévu pour l'impression. L'utilisation d'un tampon encreur permettant d'ajouter la chaîne idoine à une page existante est aussi une solution possible, mais la chaîne à détecter devant être reconnue par un mécanisme d'OCR, il est généralement nécessaire qu'elle soit écrite de façon suffisamment parallèle relativement au reste du document. Avec les solutions par reconnaissance de chaînes de caractères, il y a un risque non négligeable car les mécanismes d'OCR peuvent faire des erreurs de reconnaissance et manquer la détection de la chaîne de caractères en question. Qui plus est, si la suite de caractères forme un mot usuel, ce mot peut être présent dans le document ailleurs que sur une page de séparation ; en outre, sa présence sur une page de séparation peut être interprétée par un lecteur humain ou un procédé de reconnaissance de caractères. A contrario, si la chaine de caractères à détecter ne forme pas un mot usuel, un lecteur peut s'interroger quant à la raison de sa présence sur une page du document, que ce dernier soit le document physique ou sa représentation numérisée.

  ◦ Code optique : Ce type de solution consiste à insérer un code optique, par exemple un code à barre ou un code QR sur une page de séparation de chaque document d'un lot c'est à dire sur la première ou sur la dernière page des documents d'un lot. Un code QR (de l'anglais QR Code) est une sorte de code barre en 2D. Le "QR" signifie Quick Response (réponse rapide) car le contenu que comporte ce carré noir et blanc peut être décodé rapidement. La signification de l'information contenue dans un code optique n'est pas évidente pour un lecteur humain mais est reconnue et lue aisément par des algorithmes de reconnaissance, puisque ces codes sont justement prévus pour être décodés facilement après numérisation. Cette méthode paraît adaptée pour des documents générés par ordinateur dans les cas où il est possible de modifier la génération desdits documents de façon à y inclure le code optique idoine. Cela implique de pouvoir contrôler les mécanismes de génération des documents, et, dans ce cas, la version numérique des documents peut généralement être produite, ce qui retire tout intérêt à leur numérisation ultérieure. Dans le cas de documents préexistants sous forme physique, sans code optique sur une de leurs pages, il est possible de sur-imprimer ledit code optique à reconnaître, contraignant alors l'utilisateur à insérer les pages idoines dans un dispositif prévu pour l'impression desdits codes. L'utilisation d'un tampon encreur prévu pour ajouter ledit code optique idoine à une page existante est une autre façon d'insérer le code à reconnaître. Une des spécificités de ce type de solution est que lorsqu'il y a plusieurs codes optiques sis non loin les uns des autres, il est possible de rajouter une information entre lesdits codes optiques, typiquement un code de classification de document, une date etc. Le système de reconnaissance peut alors détecter une information dont la présence est prévue optionnellement et effectuer une tentative de reconnaissance de ladite information de façon à inclure les données de ladite information conjointement aux données constituant le document numérisé. Les inconvénients de ce type de solution comprennent la mise en place d'un système d'application dudit code optique (par exemple l'obligation pour l'utilisateur d'acquérir un tampon encreur spécifique) et la nécessité que la définition de la numérisation soit suffisamment bonne et que la marque appliquée par le truchement du dispositif d'application du code optique soit bien définie. Dans le cas d'une application par tampon encreur, il est nécessaire que l'application du tampon soit correctement effectuée en évitant les problèmes d'encrage ou de pression mal répartie sur le tampon encreur au moment de l'application du code optique.

o Changement de contenu dans une zone : Quand les documents d'un même lot sont de nature similaire et ont la même typologie et la même mise en page, il est possible de détecter les caractères d'une zone précise. A insi, il devient possible de découper le lot de pages numérisées chaque fois que change la suite de caractères dans ladite zone d'une des pages numérisées. Cette solution s'applique typiquement à un lot ne contenant que des factures clients, le découpage étant possible chaque fois qu'est détecté un changement de numéro de facture dans la zone réservée aux numéros de facture. Cette solution est de même adaptée aux cas où les premières pages d'un lot de documents donnés n'ont pas d'entête et/ou pas de pied de page alors que les autres pages ont un entête et/ou un pied de page. Il en va de même si les documents d'un même lot sont tels que les entêtes et/ou pieds de page des premières pages sont différents de ceux des autres pages. Le défaut de cette catégorie de solutions est la restriction imposée puisqu'il est requis que tous les documents d'un même lot soient conformes à une typologie précise. Quand bien même c'est le cas, il faut paramétrer spécifiquement le mécanisme de reconnaissance pour chaque typologie.

◦ Détection d'échantillons colorés : Cette méthode est prévue pour détecter sur des pages d'un lot de document au moins un pixel contenu dans la page analysée et dont la valeur de colorimétrie est comprise dans un ensemble de valeurs de colorimétrie prédéfinie. Un des défauts de cette méthode est qu'elle est peu fiable car si les zones ou les spectres de couleurs sont trop larges, il y a des risques non négligeables de faux positifs. Qui plus est, la présence d'un pixel coloré isolé dans la représentation d'une page numérisée peut être le résultat d'un aléa de numérisation. Afin de réduire certains effets trop importants liés aux aléas de la numérisation, en particulier en ce qui concerne les variations (et donc le manque de précision) d'une couleur après numérisation, à cette méthode peut être adjointe la mise en œuvre de procédés destinés à évaluer les variations dans la numérisation d'une même couleur, en particulier par le biais de la numérisation puis de l'analyse d'une page cible comprenant plusieurs couleurs en plusieurs endroits et, en particulier, des couleurs similaires en des endroits différents. Il est ensuite effectué l'évaluation des variations des composantes de colorimétrie des pixels associés à une même couleur. Une telle page cible nécessite une série de manipulations telles que : impression d'une page cible vierge contenant des zones à utiliser pour évaluer chaque couleur et l'évaluation des contrastes, remplissage ou coloriage des zones idoines de la page cible, numérisation de la page cible, identification dans la page cible des zones de couleur utilisées pour construire une représentation des couleurs à reconnaître, association des couleurs des pixels présents dans lesdites zones à un ensemble de couleur à reconnaître, au moins une desdites manipulations se faisant par le truchement d'une interaction humaine avec une interface informatique.

Ce type de méthodes implique plusieurs contraintes dont celle de nécessiter des interactions entre un utilisateur et un système informatique pour qu'elle soit mise en œuvre de façon efficace pour un lot de documents donné. En particulier, il ne permet pas que l'opérateur chargé de la numérisation des documents puisse simplement et efficacement numériser en une seule passe, sans que ne soit nécessaire un quelconque paramétrage du procédé, et sans aucune interaction humaine avec un système informatique, des lots comprenant plusieurs documents de telle façon que chaque document d'un lot ainsi numérisé soit finalement enregistré dans un fichier séparé. Qui plus est, l'efficacité de ce type de méthodes est sujette à caution puisque la détection se fait sur la présence d'un seul pixel.

Ainsi, les méthodes existantes pour séparer plusieurs documents d'un même lot de pages numérisées se révèlent telles qu'elles ont de multiples contraintes parmi lesquelles : la nécessité d'utiliser au moins un dispositif spécifique ou coûteux, l'impossibilité d'automatiser totalement la numérisation en une seule passe sans requérir d'interaction avec un système informatique et/ou au moins un paramétrage, la mise en œuvre de moyens informatiques de traitement et d'analyse importants et sont généralement peu efficaces ou onéreuses, en particulier quand elles nécessitent du personnel qualifié.

La présente invention a pour objet de remédier aux inconvénients des méthodes existantes.

Ainsi, selon un premier aspect, la présente invention vise un procédé de traitement d'un lot de documents tel que défini dans la revendication 1.

Selon une définition générale de l'invention, le procédé comprend les étapes suivantes :

a) créer par un utilisateur une page de calibrage comprenant au moins une marque de référence ayant des propriétés choisies par l'utilisateur;

b) appliquer par un utilisateur sur une page d'extrémité de chaque document à traiter au moins une marque de séparation dont les propriétés sont similaires à celles d'une des marques de référence de la page de calibrage ;

c) insérer par un utilisateur la page de calibrage créée selon l'étape a) à l'une des extrémités du lot de documents à traiter ;

d) numériser le lot de documents ainsi préparé selon les étapes a) à c) ;

e) postérieurement à la numérisation de la première page du lot de documents à traiter, détecter la présence/absence de la page de calibrage ; et

f) en cas de présence de la page de calibrage, reconnaître une page comprenant au moins une marque de séparation et en cas de reconnaissance positive séparer le document du lot en fonction de la marque de séparation ainsi reconnue.

Grâce au traitement conforme à l'invention, un utilisateur applique, facilement et rapidement, une marque de séparation sur une page d'extrémité, c'est-à-dire ou bien la première, ou bien la dernière page de chaque document d'un même lot, le dispositif utilisé pour appliquer une marque de séparation étant usuel, le moins spécifique possible et interchangeable avec un autre dispositif de même nature, par exemple et sans que cela soit limitant, un feutre surligneur de couleur couramment et facilement disponible dans le commerce généraliste. Qui plus est, la détection de la présence d'une marque de séparation se doit d'impliquer le moins de contraintes possibles quant à la typographie et la mise en page des documents numérisés.

Ainsi, le procédé selon l'invention est facile et peu onéreux à mettre en œuvre pour un utilisateur et les traitements informatiques mis en œuvre sont rapides et peu consommateurs de ressources.

Afin d'étendre le champ d'utilisation de l'invention, il a été jugé primordial que la détection de la présence d'une marque de séparation nécessitât le moins de contraintes possibles quant à la localisation de ladite marque de séparation sur une page d'extrémité, de façon à ce qu'un utilisateur puisse appliquer une marque de séparation sur toutes les pages d'extrémité en un nombre d'endroits le plus étendu possible et qu'ainsi la méthode selon l'invention ne soit pas limitée aux lots de documents pour lesquels une zone spécifique de chaque page est vierge et que soit rendu possible également l'application de marque de séparation par-dessus des inscriptions présentes dans les documents à numériser, par exemple en utilisant un dispositif surligneur qui applique des marques partiellement transparentes.

En outre, afin de rendre l'invention la moins contraignante possible, elle s'accommode des aspects suivants : L'utilisateur (appelé également opérateur chargé de la numérisation d'un lot de documents) n'a aucunement besoin d'interagir avec un système informatique, quels que soient les documents et les dispositifs utilisés pour créer des marques (de références ou) de séparation.

Par ailleurs, les étapes a) à c) peuvent être mises en œuvre par un seul et même utilisateur. En variante chaque étape a) à c) peut être mise en œuvre par un utilisateur distinct.

Ce qui est essentiel ici conformément à l'invention et que l'on ne retrouve dans aucune méthode de l'art antérieur est le fait que la marque de référence est choisie librement par l'utilisateur, sans aucun a priori, relation, connaissance ou maîtrise d'un système informatique ou de numérisation particulier. De même, il est à noter que la page de calibrage n'est pas une page de séparation mais simplement un page sur laquelle figure une marque de référence dont les propriétés sont librement choisies par l'utilisateur sans aucune contrainte technique préalable vis-à-vis du système de traitement. Il est à noter aussi que la marque de séparation n'est pas non plus une page de séparation mais une marque librement choisie par un utilisateur avec des propriétés similaires à celles de la marque de référence. Ainsi, les caractéristiques/propriétés relatives à la marque de référence figurant sur la page de calibrage sont totalement indéterminées avant la première étape a) du procédé. Il en résulte une grande souplesse d'utilisation du système de traitement conforme à l'invention par un utilisateur/opérateur non expert en informatique.

Le procédé de traitement est mis en œuvre uniquement dans le cas où une page spécifique, dite de calibrage, est détectée dans le lot de document. Ainsi, pour numériser un seul document sans mettre en œuvre le procédé, il suffit de ne pas insérer de page de calibrage. Qui plus est, si une telle détection n'a pas eu lieu, la numérisation d'un lot de document se fait de la façon usuelle, c'est-à-dire que les représentations numériques de toutes les pages du lot de documents sont généralement enregistrées dans un fichier unique ou séparés selon un autre procédé de séparation évoqué précédemment.

La couleur de chaque marque de séparation n'est pas connue a priori pour un lot donné, ce qui permet d'utiliser une grande variété de dispositifs pour appliquer les marques de séparation ainsi que de changer, d'un lot à l'autre, la couleur produite par le dispositif d'application des marques, sans nullement avoir besoin de changer un paramétrage du procédé.

La zone de présence de chaque marque de séparation n'est pas restreinte à une zone précise, ni pour tous les lots ni même pour chaque document d'un même lot.

La forme de chaque marque de séparation n'est pas connue a priori pour un lot donné, ce qui permet d'utiliser une grande variété de formes pour les marques de séparation.

La détection effective de la présence de la marque de séparation se fait de façon à ce que les aléas liés à la numérisation ne soient pas pénalisants. En effet, il est notoire qu'il est ardu de prévoir la valeur de colorimétrie des pixels d'une zone numérisée même si ladite zone ne contient sur la page physique qu'une couleur donnée, de même qu'il est ardu de prévoir de façon très précise dans quelle zone d'une représentation numérique se retrouveront certains pixels après numérisation, ou qu'il est difficile de prévoir la déformation exacte liée à la numérisation.

Par conséquent, les avantages apportés par la présente invention comprennent la possibilité d'utiliser des dispositifs courants et peu onéreux pour appliquer des marques de séparation sur des documents dont la typographie et la mise en page correspondent à la quasi-totalité des documents à numériser dans le cadre usuel de la dématérialisation de documents.

Dans un des modes de réalisation de la présente invention, la page de calibrage contient au moins une marque de référence d'une couleur de référence choisie par un utilisateur, chacune des marques de référence ayant une couleur similaire à ladite couleur de référence, chaque marque de séparation étant d'une couleur similaire à la couleur de référence et l'étape e) comprend un calcul et une mémorisation de la couleur de référence des pixels colorés de la (des) marque(s) de référence, et la reconnaissance d'une marque de séparation à l'étape f) est positive si la proportion des pixels dont la couleur est similaire à la couleur de référence précédemment mémorisée est supérieure à un seuil prédéfini.

Dans un autre mode de réalisation de l'invention, l'étape e) comprend la mémorisation de la localisation de référence de chaque marque de référence et, à l'étape f), la reconnaissance d'une marque de séparation de documents est positive si ladite marque de séparation est localisée similairement à une localisation de référence précédemment mémorisée.

Dans un autre mode de réalisation de l'invention, l'étape e) comprend la mémorisation de la forme de référence de chaque marque de référence et, à l'étape f), la reconnaissance d'une marque de séparation est positive si une forme courante constituée de pixels présents sur la page analysée est similaire à une forme de référence précédemment mémorisée.

Dans encore un autre mode de réalisation de la présente invention, la reconnaissance d'une marque de séparation de documents à l'étape f) est positive en fonction de similarités conjuguées de couleur et/ou de localisation et/ou de forme d'une marque de séparation avec une des marques de référence.

Dans encore un autre mode de réalisation de la présente invention, l'étape de séparation f) est fonction d'un paramètre dont la valeur appartient au groupe formé par « les marques de séparation sont systématiquement sur les premières pages des documents », « les marques de séparation sont systématiquement sur les dernières pages des documents ».

Dans un autre mode de réalisation de la présente invention, à l'étape e) si la page de calibrage est la première page du lot de documents le paramètre est « les marques de séparation sont systématiquement sur les premières pages des documents », et si la page de calibrage est la dernière page du lot de documents, le paramètre est « les marques de séparation sont systématiquement sur les dernières pages des documents ».

Ainsi, un utilisateur (par ailleurs aussi nommé opérateur) crée, lors d'une première étape de création, une page de calibrage. Préalablement à ladite création, ladite page de calibrage est généralement vierge de toute inscription. L'opérateur crée sur ladite page de calibrage au moins une marque de référence ayant des propriétés choisies, c'est-à-dire dont les caractéristiques sont choisies par ledit opérateur au moment de la création de ladite marque de référence. Ladite marque de référence est appliquée avec un dispositif usuel qui peut être, sans que cela soit limitant, un feutre marqueur surligneur prévu pour créer des zones de couleur « fluo » sur des documents, par exemple, sans que cela ait un caractère contraignant, de marque Stabilo®. Ladite marque de référence peut aussi être appliquée, sans que cela soit restreignant, avec un tampon encreur dont la couleur de l'encre n'est ni noire, ni grise, ni blanche. Un autre exemple de dispositif d'application possible pour créer une marque de référence est une pastille à coller, de type gommette voire un morceau de bande adhésive colorée.

Les propriétés choisies pour la ou les marque(s) de référence sont les mêmes que celles qui se retrouvent dans les marques de séparation. Ces propriétés peuvent être, par exemple de manière illustrative, des propriétés de couleur, de localisation ou encore de forme.

Lors d'une deuxième étape de marquage, au moins un utilisateur applique des marques de séparation sur des pages d'extrémité de chacun des documents dudit lot de documents à numériser. Une page de séparation de chacun des documents dudit lot est une page d'extrémité dudit document, c'est à dire soit la première page, soit la dernière page dudit document. Lesdites propriétés desdites marques de séparation sont similaires aux propriétés choisies des marques de référence.

Lors d'une troisième étape de préparation, le lot de documents à traiter est préparé afin d'être numérisé. A cet effet, la page de calibrage est insérée à l'une des extrémités du lot de documents à traiter, c'est-à-dire soit en début soit en fin de lot, et le lot est par ailleurs composé de chaque document, les feuilles contenant les pages desdits documents dudit lot étant placées les unes après les autres de telle façon que, pour chacun des documents du lot, l'ordre des pages numérisées corresponde à l'ordre naturel des pages dudit document à numériser. Dans un des modes de réalisation de l'invention, la page de calibrage est créée puis ajoutée, manuellement, aux pages du lot de document à numériser, de façon à ce que ladite page de calibrage soit une des pages d'extrémité du lot.

Lors d'une quatrième étape de numérisation, le lot de document est numérisé, usuellement après avoir été inséré dans un dispositif chargeur de documents prévu pour fournir, séquentiellement, à un dispositif de numérisation de documents les pages qui ont été placées dans ledit dispositif chargeur de document, lesdites pages étant numérisées séquentiellement, dans l'ordre dans lequel elles sont présentes dans le lot de documents, la première page du lot à être numérisée étant une des pages d'extrémité du lot de documents.

Lors d'une cinquième étape de détection, postérieurement à la numérisation de la première page du lot de documents à traiter, un procédé, entièrement automatisé, mis en œuvre par des moyens informatiques est exécuté. Le moment de ladite exécution peut être très proche dans le temps du moment où la première page du lot a été totalement numérisée et où une représentation numérique de ladite première page dudit lot est disponible à l'analyse par un processeur d'ordinateur. Ledit moment peut aussi avoir lieu après que toutes les pages dudit lot ont été numérisées, en particulier lorsque la page de calibrage est la dernière page du lot de documents.

Ledit procédé met en œuvre une série d'analyses des pages numérisées.

En premier lieu est détectée la présence ou l'absence d'une page de calibrage de façon à pouvoir inhiber le procédé si aucune page de calibrage n'est détectée.

La présence effective d'une page de calibrage est automatiquement évaluée, en particulier relativement à la présence d'une ou plusieurs marques de référence dans la page analysée.

Avantageusement, cela permet qu'un opérateur en charge de la numérisation de documents puisse, sans aucune interaction avec un système informatique via une interface homme-machine, numériser des lots contenant un seul document, des lots comprenant plusieurs documents mais pour lequel on ne veut pas que soit procédé à une séparation automatique selon l'invention, ainsi que des lots comprenant plusieurs documents pour lequel il est désiré que soit procédé à une séparation automatique selon l'invention. La mise en œuvre effective du procédé selon l'invention est fonction uniquement de la présence d'une page de calibrage à l'une des extrémités du lot de documents à traiter. Afin d'effectuer la détection de présence d'une page de calibrage dans le lot de documents à numériser, des analyses et des traitements sont effectués relativement à la représentation numérique de la page analysée de façon à réduire les risques de faux positifs et de faux négatifs.

A seule fin d'illustration et de manière nullement limitante, les traitements et les analyses effectués lors de l'évaluation de la présence effective d'une ou plusieurs marques de référence dans la page analysée comprennent une ou plusieurs actions parmi lesquelles :

- La détection de la présence de mots ou de suite de caractères reconnus grâce à une analyse OCR de façon à ce que :

  o si des suites de caractères prédéfinies sont reconnues, par exemple et de manière non limitante, la suite de mots « page de calibrage » ou « 000CALIBR111 », et qu'aucune autre suite de caractères n'est reconnue, il est considéré que ladite page analysée est une page de calibrage. De plus, on pourra éliminer de la représentation numérique de la page analysée les pixels formant les suites de caractères prédéfinies de façon à ce que lesdits pixels ne soient pas pris en compte dans les traitements et analyses ultérieurs.

  o s'il y a des mots reconnus dans la page analysée qui ne font pas partie des suites de caractères prédéfinies ci-dessus, il est considéré que ladite page analysée n'est pas une page de calibrage ; En effet, il s'agit alors très certainement d'une page contenant du texte et ce ne peut donc pas être une page de calibrage,

- Le calcul de la proportion des pixels de la page analysée dont la couleur est proche du noir ou d'une couleur de la gamme des gris, le blanc et les couleurs similaires au blanc mis à part, de façon à ce que si la proportion de pixels dont la couleur est dans la gamme des gris (blancs mis à part) est supérieure à un seuil prédéterminé, il est considéré que la page analysée n'est pas une page de calibrage ;

- L'évaluation de la répartition des couleurs des pixels colorés de la page analysée de façon à ce que si lesdites couleurs sont réparties sur un spectre dont la largeur est supérieure à un seuil prédéfini, la page analysée n'est pas considérée être une page de calibrage. On élimine ainsi les pages qui contiennent des photographies, des graphiques etc. ;

- L'évaluation de la zone dans laquelle sont localisés les pixels non éliminés pour déterminer la zone de localisation. Si le rapport de la taille de ladite zone de localisation sur la taille de l'image analysée est supérieur à un seuil prédéfini, la page analysée n'est pas considérée être une page de calibrage. Il peut s'agir de la représentation numérisée d'une photo en couleur par exemple. De même si ce rapport est inférieur à un seuil prédéfini, la page analysée n'est pas considérée être une page de calibrage, car une proportion trop faible de pixels colorés ne permet pas de déterminer de façon raisonnablement certaine qu'une marque de référence est présente sur la page analysée ;

- L'évaluation de la proximité des pixels colorés (dont la couleur n'est pas similaire à une couleur de la gamme des gris) les uns par rapport aux autres dans la page analysée de façon à ce que la page analysée ne soit pas considérée être une page de calibrage si les pixels colorés présents sur ladite page analysée sont largement répartis dans la page. En effet, sont considérées être des marques de référence uniquement les inscriptions dont la localisation sur la page est confinée relativement à la surface de la page ;

Si une page de calibrage a été effectivement détectée, des caractéristiques de chaque marque de référence présente sur la page de calibrage peuvent être mémorisées lors de cette étape.

Si la présence d'une page de calibrage a été effectivement détectée, lors d'une sixième étape, dite de séparation, le procédé met en œuvre sur chacune des pages numérisées du lot de documents, un traitement permettant de reconnaitre les pages comprenant au moins une marque de séparation. On parlera aussi d'identification de marque de séparation, de détection de marque de séparation et de détection de présence de marque de séparation. A cet effet, la représentation numérique de chaque page du lot de documents numérisés est analysée et, si la reconnaissance d'une marque de séparation est positive sur ladite page analysée le procédé effectue la séparation du document des autres documents dudit lot. La détection de la présence d'une marque de séparation sur une page analysée comprend des traitements de ladite page analysée et des comparaisons de caractéristiques issues de ladite page traitée avec les caractéristiques mémorisées d'une marque de référence. Lorsqu'une marque de séparation a été détectée sur une page analysée, la séparation du document courant est effectuée de la manière suivante :

- Si les pages de séparation sont les premières pages de chacun des documents dudit lot et qu'au moins un document a déjà été séparé, un nouveau document est séparé qui contient toutes les pages précédemment analysées qui n'ont pas été incluses dans un document précédemment séparé, sauf la page analysée couramment,
- Si les pages de séparation sont les dernières pages de chacun des documents dudit lot, un nouveau document est séparé qui contient toutes les pages précédemment analysées qui n'ont pas été incluses dans un document précédemment séparé, y compris la page analysée couramment.

Dans un des modes de réalisation de l'invention, nommé détection chromatique, la ou les marque(s) de référence est (sont) d'une couleur choisie, c'est-à-dire d'une couleur au choix de l'utilisateur, ladite couleur choisie n'étant prédéterminée d'aucune façon et pouvant de fait être n'importe quelle couleur que l'utilisateur décide d'utiliser pour mettre en œuvre le procédé selon l'invention, et, s'il y a plus d'une marque de référence sur la page de calibrage, chacune desdites marques de référence est d'une couleur similaire. Avantageusement, cela permet de déterminer aisément la présence d'une marque de séparation de couleur similaire à la couleur de référence, en particulier lorsque le lot de documents à traiter comprend essentiellement des documents imprimés en noir et blanc ou en niveaux de gris, ce qui est un des cas fréquemment rencontrés lors de la numérisation de documents.

On définit les termes « de couleur » ou « coloré » pour la présente invention comme étant éloignés des couleurs de la gamme des gris, blanc et noir y compris.

On définit la similarité entre deux couleurs pour la présente invention comme deux couleurs dont la perception par la vision humaine est identique.

Plus précisément, on définit pour la présente invention la notion de distance entre deux couleurs.

Afin de déterminer la façon dont est évaluée la similitude ou la proximité de deux couleurs au sens de la présente invention, il convient de préciser les choses suivantes :

Les représentations numériques d'images issues de documents numérisés sont composées d'une matrice à deux dimensions contenant des pixels, chaque pixel ayant une couleur particulière. La couleur d'un desdits pixels peut-être représentée numériquement, généralement par un triplet de valeurs de couleurs primaires ou encore de valeurs dans un espace « Teinte Saturation Luminosité » qui, une fois composées ou recomposées par un dispositif tel qu'un écran à cristaux liquide, un écran à tube cathodique, un vidéoprojecteur, une imprimante couleur etc., produisent ou reproduisent la couleur dudit pixel. Les espaces de colorimétrie les plus communément utilisés en imagerie numérique sont ceux de type Rouge-Vert-Bleu RVB, nommés RGB en anglais, ou « Teinte saturation luminosité » (HSL en anglais, pour hue saturation lightness) et sont définis par des normes, par exemple, pour un espace RGB, la norme sRGB (CIE 61966-2-1) ou, pour un espace HSL, la norme de facto CSS3. On notera qu'il existe une correspondance exacte entre les valeurs d'un triplet dans un espace RVB et les valeurs du triplet représentant la même couleur dans un espace TSL. Néanmoins, la distance entre deux triplets représentant deux couleurs n'est pas la même pour chacun des espaces RVB et HSL et, en fonction des traitements à réaliser, il sera plus judicieux d'utiliser l'un ou l'autre type d'espace. Dans ce qui suit, on traitera d'un espace RGB, de manière illustrative et sans que ce soit contraignant, sachant que les distances pourraient être calculées dans tout autre espace de colorimétrie.

Dans un espace RGB, chaque couleur est représentée par un triplet de proportions des composants primaires de ladite couleur : proportion de rouge, proportion de vert, proportion de bleu. Certaines couleurs particulières dans un tel espace sont les suivantes :

Blanc : (100%, 100%, 100%).

Noir : (0%, 0%, 0%).

Rouge primaire : (100%, 0%, 0%).

Vert primaire : (0%, 100%, 0%).

Bleu primaire : (0%, 0%, 100%).

Il est notable que pour une valeur de N comprise entre 0 et 100, les couleurs composant la gamme des gris sont caractérisées par les triplets : (N%, N%, N%). Ainsi, la couleur blanc et la couleur noir sont les extrêmes de la gamme des gris.

La présente invention impliquant, dans le mode de détection chromatique, de comparer deux couleurs entre elles avec une certaine précision, de façon à déterminer si lesdites deux couleurs sont similaires ou proches, il est nécessaire de disposer d'une méthode de comparaison avec la précision qui lui est associée.

Par exemple, et de manière non limitante, il peut être considéré que sont de couleurs similaires avec une précision n les pixels dont les valeurs de colorimétrie ne diffèrent pas de plus d'un nombre donné d'unités dans chacune des composantes de colorimétrie, ledit nombre d'unité définissant la précision de la comparaison. Dans le cas de cette méthode de comparaison de couleur, de deux pixels $p_u$ et $p_v$ dont les couleurs sont respectivement $u$ et $v$ de valeur $(r_u, g_u, b_u)$ et $(r_v, g_v, b_v)$ sont de couleurs similaires avec la précision n si les propositions suivantes sont toutes vraies :

$$|(r_u\text{-}r_v)|<n,\ |(g_u\text{-}g_v)|<n,\ |(b_u\text{-}b_v)|<n.$$

La proximité entre la couleur u et la couleur v dont les triplets de composants primaires sont respectivement $(r_u, g_u, b_u)$ et $(r_v, g_v, b_v)$ s'exprime avec cette méthode de comparaison par le maximum de la valeur absolue de la différence de chacun des composants de chacune desdites deux couleurs, c'est-à-dire $\max(|(r_u\text{-}r_v)|,\ |(g_u\text{-}g_v)|,\ |(b_u\text{-}b_v)|)$. Une proximité de 0 entre $p_u$ et $p_v$ signifie alors que $p_u$ et $p_v$ sont exactement la même couleur. De la même façon sont proches de $p_u$ avec une proximité de 10 toutes les couleurs dont les triplets $(r_v, g_v, b_v)$ dans l'espace RGB sont tels que $r_u\text{-}10 \leq r_v \leq r_u\text{+}10$, $g_u\text{-}10 \leq g_v \leq g_u\text{+}10$ et $b_u\text{-}10 \leq b_v \leq b_u\text{+}10$. Avec cette méthode de comparaison, on associe la similarité entre deux couleurs avec une précision $n$ au fait que la proximité entre lesdites deux couleurs est au plus de $n$.

La précédente méthode de comparaison de couleurs a plusieurs inconvénients dont celui de ne pas quantifier précisément la distance entre deux couleurs dans l'espace de colorimétrie du fait qu'elle ne satisfait pas à l'inégalité triangulaire et que, subséquemment, on ne peut pas strictement parler de distance entre couleurs lorsqu'est utilisée cette méthode de comparaison.

Il existe au moins une autre façon de comparer deux couleurs entres elles qui met en œuvre une notion stricte de distance entre deux couleurs, notion qui est bien connue de l'homme de l'art. Il a déjà été mentionné que dans le cas particulier des images numérisées, les couleurs des pixels constituant les images numérisées sont généralement représentées dans un espace de colorimétrie à trois dimensions. Un système RGB usuellement mis en œuvre dans les représentations numériques des images numérisées utilise fréquemment les valeurs de trois couleurs primaires codées sur un octet, soit 256 valeurs possibles, de 0 à 255, définissant un espace discret de $256^3$ (16 777 216) couleurs. Dans un tel espace, souvent représenté par « le cube de maxwell », la distance entre deux couleurs u et v de coordonnées respectives $(r_u, g_u, b_u)$ et $(r_v, g_v, b_v)$ peut être exprimée sous forme de distance euclidienne dans un espace à 3 dimensions :

$$d(u, v) = \sqrt{(r_u - r_v)^2 + (g_u - g_v)^2 + (b_u - b_v)^2}$$

Sans que cela ait un caractère contraignant d'aucune manière, il est souvent utile et pratique d'exprimer une telle distance non pas en valeur absolue mais en pourcentage, sachant que la distance entre le noir (0,0,0) et le blanc (255,255,255), qui est la distance maximale possible, doit alors être de 100%. Lorsque la représentation numérique d'une image numérisée utilise un espace RGB dont les valeurs des composantes primaires sont codées sur un octet et sont donc comprises entre 0 et 255, la formule utilisée pour calculer la distance colorimétrique en pourcentage entre les couleurs $(r_u, g_u, b_u)$ et $(r_v, g_v, b_v)$ est :

$$d(u, v) = 100.\sqrt{((r_u/255 - r_v/255)^2 + (g_u/255 - g_v/255)^2 + (b_u/255 - b_v/255)^2)/3)}$$

Lorsqu'est utilisée cette méthode, on dit que deux couleurs sont similaires avec une précision n au sens de l'invention lorsque lesdites deux couleurs sont distantes d'au plus n%.

Dans un des modes de réalisation de l'invention, la méthode permettant de déterminer que deux couleurs sont similaires avec une précision n est la méthode de comparaison par distance colorimétrique en pourcentage ci-dessus avec une précision de *n%,* la valeur de *n* étant paramétrable, par exemple, et sans que cela soit limitant, par le truchement d'une interface utilisateur ou encore par modification d'une constante dans un programme d'ordinateur. Dans ce mode de réalisation de l'invention, n sera généralement fixé de telle manière qu'un opérateur de numérisation n'aura pas à modifier ni à connaître cette valeur. Des tests préalables pourront donner une valeur optimale de *n,* par exemple, et de façon nullement contraignante, de 3%, cette valeur réduisant le nombre de faux positifs et maximisant les détections effectives de marques de séparation.

Dans le mode détection chromatique, ni la localisation, ni la forme d'une marque de référence sise sur une page de calibrage n'est fixée. Une marque de référence peut ainsi avoir la forme, sans que cela ait un caractère limitant, d'une croix, d'un ovale, d'un cercle, d'un disque, voire avoir une forme plus complexe lorsqu'elle est appliquée avec un tampon encreur. Dans ce mode de réalisation, la page de calibrage contient usuellement, une fois numérisée, une proportion de pixel de couleurs similaires, généralement éloignées de la gamme des gris, blancs et noirs y compris, ladite proportion étant supérieure à une proportion prédéfinie, ladite proportion de pixels s'exprimant relativement au nombre total de pixels analysés, ce qui revient à dire que la surface occupée par une marque de référence doit être supérieure, proportionnellement, à un seuil prédéfini.

Dans le mode de détection chromatique, la couleur de la ou des marques de référence présentes sur la page de calibrage définit la couleur de référence. Généralement, ladite couleur de référence est la couleur moyenne des pixels correspondant aux marques de référence présentes sur la page de calibrage, une fois cette dernière numérisée.

Toujours dans le mode détection chromatique, chaque marque de séparation consiste en une marque dont la couleur est similaire à la couleur de référence. Ladite marque de séparation est généralement avantageusement appliquée avec un dispositif similaire à celui utilisé préalablement pour appliquer la ou les marques de référence sur la page de calibrage. Par similaire on entend « produisant des marques dont la couleur est similaire avec une précision prédéfinie », la similarité entre couleurs ayant été définie ci-dessus.

Afin que les marques de séparation et les marques de référence aient des couleurs similaires, le dispositif utilisé pour appliquer les marques de séparation à l'étape de marquage b) est typiquement le même dispositif que (ou un dispositif similaire à) celui utilisé pour appliquer la ou les marque(s) de référence. Par exemple et sans ce que cela ait un caractère contraignant, le dispositif utilisé pour appliquer les marques de séparation est le même feutre surligneur que celui utilisé pour appliquer la ou les marque(s) de référence. Un autre exemple non contraignant est donné quand plusieurs dispositifs sont utilisés pour appliquer les marques de séparation, par plusieurs utilisateurs différents, lesdits dispositifs étant des marqueurs surligneurs de même marque et de même référence que celui utilisé pour appliquer la ou les marque(s) de référence sur la page de calibrage, produisant ainsi des marques de séparation et de référence de couleur similaire. Un ou plusieurs tampons encreurs utilisant une encre de couleur similaire est un autre exemple de dispositifs pour appliquer les marques de séparation et de référence. Des pastilles autocollantes ainsi que des morceaux de bande adhésive de couleurs similaires sont encore d'autres exemples pertinents mais nullement contraignants de dispositifs pour appliquer des marques au sens de l'invention.

Dans le mode détection chromatique, la localisation d'une marque de référence dans la page de calibrage n'est pas fixée a priori et l'opérateur peut l'y appliquer en toute zone. De la même façon, la localisation d'une marque de séparation sur une page d'extrémité d'un des documents du lot de documents à traiter n'est pas fixée a priori et l'opérateur peut l'y appliquer en toute zone. Néanmoins, afin d'optimiser la détection des marques de références et de façon à ne pas dénaturer plus que nécessaire les documents, il convient de s'efforcer d'appliquer les marques de séparation en des localisations vierges de toute inscription.

Un exemple illustrant de façon non limitante une réalisation de l'invention en ce qui concerne les traitements appliquées à une page d'extrémité du lot dans le mode de détection chromatique, est donné ici lorsque parmi lesdits traitements et analyses effectuées à l'étape de détection e) se trouve un traitement par l'application à la page numérisée analysée d'un algorithme de lissage d'image, de façon à atténuer l'importance des pixels isolés dont la couleur n'est pas similaire à la couleur blanche. Ce peut être, par exemple et sans que cela soit limitant, un algorithme de flou gaussien ou un algorithme moyenneur 3x3. Ainsi, les pixels isolés dont la couleur n'est pas similaire à la couleur blanche mais qui sont entourés d'une majorité de pixels dont la couleur est similaire à la couleur blanche se voient modifiés de façon à ce que la couleur qui leur est associée devienne plus proche de la couleur blanche. L'application d'un algorithme de lissage permet de même d'éviter que ne soient détectés sur la page analysée des pixels isolés ou peu nombreux dont la couleur est similaire à la couleur de référence, réduisant ainsi drastiquement le risque de faux positifs.

D'autres exemples non contraignant de traitements et analyses effectués, dans le mode de réalisation détection chromatique, sur une page d'extrémité du lot de documents afin de déterminer la présence d'une page de calibrage sont donnés ci-après :

- L'élimination au sein de la représentation numérique de la page analysée des pixels de couleur similaires au blanc, au noir et aux gris, ladite élimination s'effectuant, par exemple et de manière nullement contraignante, par l'attribution auxdits pixels éliminés d'une caractéristique de transparence non nulle dans une représentation d'image de type PNG ;

- Le calcul de la couleur moyenne des pixels non éliminés dans la représentation numérique de la page analysée ;
- L'élimination dans la représentation numérique de la page analysée des pixels de couleur non similaire à ladite couleur moyenne ;
- L'évaluation de la proximité des pixels colorés les uns par rapport aux autres dans la page analysée de façon à ce que la page analysée ne soit pas considérée être une page de calibrage si les pixels colorés présents sur ladite page analysée sont largement répartis dans la page. En effet, sont considérées être des marques de référence uniquement les inscriptions dont la localisation sur la page est confinée relativement à la surface de la page ;

Dans le mode de détection chromatique, lorsque la présence d'une page de calibrage a été détectée, une mémorisation des caractéristiques des marques de référence est effectuée qui comprend la couleur moyenne de référence des pixels colorés présents dans la représentation numérique de la page de calibrage, après que celle-ci a été traitée. Ensuite, le procédé selon l'invention met en œuvre l'étape de détection afin de reconnaître les marques de séparation présentes sur les représentations numériques des pages des documents du lot : ladite reconnaissance est positive lorsque la proportion des pixels dont la couleur est similaire à la couleur de référence précédemment mémorisée est supérieure à un seuil prédéfini. Lors de la phase de détection dans le mode chromatique, le procédé met en œuvre des traitements et analyses des représentations numériques des pages du lot de documents.

Dans le mode de détection chromatique et à la seule fin d'illustration, les traitements et analyses effectués sur la représentation numérique d'une page analysée en vue de la détection de la présence d'une marque de séparation à l'étape de séparation f) comprennent les étapes suivantes :

- Elimination dans une représentation numérique de la page analysée des pixels de couleur non similaire à la couleur de référence ;
- Elimination dans ladite représentation numérique de la page analysée des pixels correspondant aux chaines de caractères reconnues par un algorithme de reconnaissance optique de caractères ;
- Evaluation de la zone dans laquelle sont localisés les pixels non éliminés de ladite représentation numérique de la page analysée afin de déterminer la zone de localisation. Si le rapport de la taille de ladite zone de localisation sur la taille de l'image analysée est supérieur à un seuil prédéfini, la page analysée n'est pas considérée être une page de séparation. De même si ce rapport est inférieur à un seuil prédéfini, la page analysée n'est pas considérée être une page de séparation ;
- Evaluation, dans ladite représentation numérique de la page analysée, de la proximité les uns par rapport aux autres des pixels ayant une couleur similaire à la couleur de référence de façon à ce que la page analysée ne soit pas considérée être une page de séparation si les pixels de couleur similaires à la couleur de référence présents sur ladite page analysée sont largement répartis dans la page. En effet, sont considérées être des marques de séparation uniquement les inscriptions dont la localisation sur la page est confinée relativement à la surface de la page ;
- Application d'un algorithme de lissage à ladite représentation numérique de la page ainsi traitée ;
- Calcul de la proportion, par rapport au nombre de pixels total constituant ladite représentation numérique de la page analysée, du nombre de pixels dont la couleur est similaire à la couleur de référence. Si ladite proportion est supérieure à un seuil prédéfini, alors la détection de la présence d'une marque de séparation sur la page analysée est évaluée positivement, sinon elle est évaluée négativement.

Avantageusement, le procédé selon l'invention permet ainsi de séparer automatiquement des documents lorsqu'est détectée en tout lieu d'une page numérisée une marque de séparation dont la couleur est similaire à la couleur de référence. Cela permet, par exemple et sans que cela ait un caractère limitant, de traiter facilement et efficacement des lots de documents dont les représentations numériques des pages sont composées de pixels dont les couleurs sont similaires aux couleurs de la gamme des gris à l'exception des pixels constituant des marques de séparation. Cela permet de même l'application aisée et la détection rapide et nécessitant peu de ressources des marques de séparation si lesdites marques de séparation et les marques de références utilisent des couleurs très éloignées de celles utilisées par ailleurs dans le lot de document numérisés.

Néanmoins, il est des cas où les documents numérisés sont tels que la détection d'une marque de séparation est ardue en utilisant une détection de type chromatique, même en tenant compte de l'adjacence des pixels composant les marques de séparation. Il peut alors s'avérer utile de mettre en œuvre d'autres propriétés des marques de référence et de séparation.

Dans un autre mode de réalisation de l'invention, appelé ci-après détection par localisation, des caractéristiques de chaque marque de référence sont enregistrées à l'étape de détection e) qui comprennent la localisation de référence de chaque marque de référence dans la page de calibrage. De même, la détection de la présence d'une marque de séparation sur une page analysée est évaluée relativement à la présence dans la page analysée d'une telle marque de séparation dans une localisation similaire à une des localisations de référence précédemment mémorisées.

Dans le mode de détection par localisation, l'opérateur s'efforcera généralement d'appliquer les marques de référence en des localisations qui contiennent notoirement peu d'informations écrites ou graphiques dans les documents du lot à numériser. Une telle localisation contenant notoirement peu d'information dans un lot de documents à numériser peut être, par exemple et sans caractère contraignant, sise dans la marge du coin en bas à gauche des documents.

Dans le mode détection par localisation, ni la couleur, ni la forme d'une marque de référence sise sur une page de calibrage n'est fixée. Dans ce mode de réalisation, la page de calibrage contient, une fois numérisée, au moins une marque de référence sise en une localisation de référence dont les caractéristiques sont mémorisées à l'étape de détection e). A seul fin d'illustration, voici quelquesunes des caractéristiques de localisation de référence qui peuvent être mémorisées :

- La ou les région(s) dans laquelle (lesquelles) la marque de référence a été détectée. Ce peut être, par exemple et sans caractère limitant, une région cardinale (nord-ouest, nord, nord-est, est, sud-est, sud, sud-ouest, ouest) de la zone au sein de la page analysée, chaque zone étant de surface et de dimensions égales, c'est-à-dire que la page analysée est considérée être constituée de 9 zones rectangulaires dont la hauteur (respectivement la largeur) est égale à un tiers de la hauteur (respectivement de la largeur) de la page analysée. Un autre découpage peut être utilisé, en particulier qui comprend plus de régions considérées, ou des régions de tailles différentes, par exemple, s'il est prévu d'appliquer les marques de séparation dans les marges des documents du lot à analyser, un ensemble de régions composé des régions suivantes : « coin de marges haut-gauche »,« marge haute gauche », « marge haute droite », « coin de marges haut-droit », « marge droite haute », « marge droite basse », « coin de marges bas-droit », « marge basse droite », « marge basse gauche », « coin de marges bas-gauche », « marge gauche basse », « marge gauche haute », « hors marge (centre) ».
- La position de la marque de référence dans la région cardinale précédemment mémorisée, par exemple et sans que cela ait un caractère obligatoire, la position du barycentre de l'ensemble des pixels de ladite région cardinale dont la couleur n'est pas similaire à la couleur blanche, chaque pixel étant affecté d'une pondération égale en ce qui concerne le calcul du barycentre. La mémorisation des caractéristiques de chaque forme de référence contient alors les coordonnées du barycentre précédemment calculé. La position de la marque de référence dans la région cardinale peut aussi être la position de son pixel le plus proche du point « haut-gauche » de la région dans laquelle la marque de référence a été détectée, voire associé aux coordonnées relatives (pourcentage de la taille de la zone) du pixel de couleur non similaire au blanc le plus éloigné du point « haut-gauche » de la région de détection. Une conjonction des coordonnées de plusieurs points de la marque de référence peut aussi être mémorisée, par exemple barycentre, point le plus proche et point le plus éloigné du point haut gauche de la région de détection. Une zone la plus petite possible, de forme prédéfinie (carrée, rectangle, disque) et strictement occupée par la marque de référence, dans la région de détection, peut, de la même façon, être un exemple de caractéristiques calculées et mémorisées pour chaque marque de référence. Déterminer une telle zone peut alors faire appel à des algorithmes de résolution des problèmes dits de « packing » ou de calcul, par exemple, de cercle minimum, de rectangle minimum ou de triangle minimum englobant la marque de référence, la mémorisation des caractéristiques de ces formes minimum se faisant alors en fonction du type de forme (pour un cercle minimum, coordonnées du centre et rayon, pour un rectangle ou un triangle minimum, coordonnées des points d'angles, etc.). La détermination et la mémorisation des points formants une enveloppe convexe englobant la marque de référence peut aussi être utilisée, par exemple en mettant en œuvre des algorithmes de type heuristiques (heuristique de Akl-Toussaint) ou des algorithmes mettant en œuvre des méthodes exactes de type Marche de Jarvis ou Balayage de Graham. Une conjugaison de plusieurs caractéristiques sera souvent utilisé, afin d'équilibrer précision, finesse et temps de calcul, dans l'optique d'optimiser la fiabilité des étapes de détection et de séparation.

Dans le mode de détection par localisation, lorsque la présence d'une page de calibrage a été détectée, une mémorisation des caractéristiques des marques de référence est effectuée qui comprend des caractéristiques de localisation de référence de chaque marque de référence présentes dans la représentation numérique de la page de calibrage, après que celle-ci a été traitée.

Toujours dans le mode détection par localisation, chaque marque de séparation consiste en une marque dont la localisation est similaire à une localisation de référence précédemment mémorisée.

Dans le mode de détection par localisation, la reconnaissance positive ou négative d'une marque de séparation de document se base sur l'évaluation de la similarité entre une localisation de référence mémorisée à l'étape e) et la localisation d'une marque de séparation sur une page analysée à l'étape f), ce qui se fait par comparaison des caractéristiques desdites localisations. La comparaison est généralement effectuée au sein d'un espace métrique formé par lesdites caractéristiques et la similarité entre deux localisations est évaluée par rapport à une distance entre l'ensemble des caractéristiques associées à la localisation de référence et l'ensemble des caractéristiques déduites de la page analysée. Ainsi, dire que deux localisations sont similaires dans le mode de réalisation par localisation signifie généralement que la distance entre l'ensemble des caractéristiques de la première localisation et l'ensemble des caractéristiques de la seconde localisation est inférieure à un seuil prédéfini. Le calcul de ladite distance peut être effectué, par exemple et de manière non limitante, en tant que distance euclidienne ou distance de Manhattan, sachant que l'inégalité triangulaire doit être respectée. Ledit seuil, parfois appelé précision, est défini, par exemple et sans que cela ait un caractère contraignant, au moyen d'une variable ou d'une constante dans un programme d'ordinateur mettant en œuvre le procédé selon l'invention. Des critères de similarités plus simples peuvent aussi être utilisés, comme la présence d'une proportion supérieure à un seuil prédéfini de pixels de couleur éloignée de la couleur blanche et dont la localisation est contenue dans une zone agrandie, selon un taux prédéfini, autour d'une zone délimitée par une localisation de référence précédemment mémorisée.

Dans le mode de détection par localisation et à la seule fin d'illustration, les traitements et analyses effectués sur la représentation numérique d'une page analysée en vue de la reconnaissance d'une marque de séparation à l'étape de séparation f) comprennent les étapes suivantes :

- Elimination dans une représentation numérique de la page analysée des pixels de couleur similaire à la couleur blanche ;
- Détermination des zones d'analyse en fonction des localisations de référence précédemment mémorisées, par exemple autour, avec une distance maximum prédéfinie, des points et zones dont les caractéristiques ont été précédemment mémorisées ;
- Elimination de ladite représentation numérique des pixels extérieurs aux zones d'analyse ;
- Elimination dans lesdites zones d'analyse des pixels correspondant aux caractères reconnus par un algorithme de reconnaissance optique de caractères ;
- Pour chacune desdites zones d'analyse :

  ◦ Evaluation de la proximité les uns par rapport aux autres des pixels ayant une couleur non similaire à la couleur blanche façon à ce que la page analysée ne soit pas considérée être une page de séparation si lesdits pixels présents dans ladite zone d'analyse y sont largement répartis. En effet, sont considérées être des marques de séparation uniquement les inscriptions dont la localisation sur la page est confinée relativement à la surface de la page ;
  o Calcul des caractéristiques de localisation des pixels de ladite zone d'analyse en utilisant les mêmes traitements et règles que ceux utilisés lors de l'étape e) pour déterminer les caractéristiques des marques de référence ;
  ◦ Comparaison des caractéristiques calculées et des caractéristiques mémorisées à l'étape e). Si ces caractéristiques sont similaires, la reconnaissance d'une marque de séparation est positive, sinon elle est négative. En particulier, comparaison de la proportion de pixels restant dans ladite zone d'analyse avec un seuil prédéfini, ladite proportion étant calculée par rapport à l'ensemble des pixels de la page analysée ou à l'ensemble des pixels de la zone d'analyse. Si ladite proportion est supérieure audit seuil, la reconnaissance d'une marque de séparation est positive, sinon elle est négative.

Avantageusement, le procédé selon l'invention permet ainsi de séparer automatiquement des documents lorsqu'est détectée une marque de séparation dans une zone de référence quelle que soit la forme et la couleur de ladite marque de séparation, à partir du moment où elle se trouve dans une localisation similaire à une des localisations de référence. Cela permet, par exemple, de traiter facilement et efficacement des lots de documents dont les mises en page sont telles que toutes les pages ont au moins une marge vierge de toute inscription qui soit suffisamment large ou haute pour qu'un opérateur puisse y appliquer une marque de séparation.

Cependant, il est des cas où les documents numérisés sont tels que la détection d'une marque de séparation est ardue en utilisant une détection par localisation, même en tenant compte de l'adjacence des pixels composants les marques de séparation. Il peut alors s'avérer utile de mettre en œuvre d'autres propriétés.

Dans un autre mode de réalisation de l'invention, appelé ci-après détection morphologique, des caractéristiques de chaque marque de référence sont enregistrées à l'étape de détection e) qui comprennent la forme de référence de chaque marque de référence dans la page de calibrage. De même, la reconnaissance d'une marque de séparation sur une page analysée est évaluée relativement à la présence dans la page analysée d'une telle marque de séparation qui a une forme similaire à une des formes de référence précédemment mémorisées. Par exemple, et de façon nullement contraignante, deux marques formant chacune une croix, un cercle, un V etc... sont évaluées comme étant similaires.

Dans le mode de détection morphologique, l'opérateur s'efforcera généralement d'appliquer les marques de référence de telle manière que la forme desdites marques de référence soit notoirement différente de toutes les formes des inscriptions des documents du lot à numériser. Une telle forme notoirement différente des inscriptions du lot de document à numériser peut être, par exemple et sans caractère contraignant, un triangle, un disque, une spirale, une signature manuscrite.

Dans le mode détection morphologique, ni la couleur, ni la localisation d'une marque de référence sise sur une page de calibrage n'est fixée. Dans ce mode de réalisation, la page de calibrage contient au moins une marque de référence d'une forme de référence dont les caractéristiques sont mémorisées à l'étape de détection e).

L'homme de l'art connaît les procédés de mise en correspondance de formes (pattern matching) dans des documents numériques et la littérature traitant de ce sujet est variée et abondante. Citons, à seule fin d'illustration, les méthodes SURF ou SPIF pour l'extraction de points d'intérêts et les méthodes RANSAC ou FANN (Fast Approximate Nearest Neighbor) pour la mise en correspondance de deux formes.

A seule fin d'illustration, des caractéristiques de forme de référence qui peuvent être mémorisées contiennent des points d'intérêt extraits de chaque marque de référence sur la page de calibrage avec la méthode SURF ou la méthode SIFT.

Dans le mode de détection morphologique, la reconnaissance d'une marque de séparation à l'étape f) se fait par mise en correspondance de forme, entre une forme de référence dont les caractéristiques ont été calculée et mémorisées à l'étape e) et une forme détectée sur la page analysée. La discipline de mise en correspondance de deux formes a depuis longtemps introduit la notion de distance ou de pseudo-distance entre deux formes qui permet de quantifier la similarité entre deux formes. On citera à fin d'illustration les distances de Hausdorff (dont la distance de Hausdorff modifiée), de Hamming ainsi que d'autres méthodes d'évaluation de similarité entre deux formes, dont la comparaison de squelettes (Comparing Skelettons) et les méthodes s'appuyant sur les fonctions d'angle tournant (turning angle functions). Les caractéristiques mémorisées à l'étape e) doivent permettre l'évaluation à l'étape f) du degré de similarité entre une forme de référence et une forme présente sur la page analysée. Ainsi lesdites caractéristiques et ladite évaluation sont donc intimement corrélées. A titre d'exemple, si les méthodes d'évaluation du degré de similarité comprennent la comparaison de squelette, les caractéristiques mémorisées comprennent les points ou vecteurs formant les squelettes des formes de référence. Chacune des méthodes d'évaluation de similarité entre deux formes permet de mesurer un degré de similarité et dire qu'une forme de référence et une forme présente sur la page analysée sont similaires au sens de la présente invention revient à dire que le degré de similarité entre ces deux formes est supérieur à un seuil prédéfini. Ledit seuil, parfois appelé précision, est défini, par exemple et sans que cela ait un caractère contraignant, au moyen d'une variable ou d'une constante dans un programme d'ordinateur mettant en œuvre le procédé selon l'invention.

Dans le mode de détection morphologique et à la seule fin d'illustration, les traitements et analyses effectués sur la représentation numérique d'une page analysée en vue de la détection de la présence d'une marque de séparation à l'étape de séparation f) comprennent les étapes suivantes :

- Elimination dans une représentation numérique de la page analysée des pixels de couleur similaire à la couleur blanche ;
- Elimination dans ladite représentation numérique de la page analysée des pixels correspondant aux caractères reconnus par un algorithme de reconnaissance optique de caractères ;
- Extraction des points d'intérêts dans la représentation numérique de la page ainsi traitée ;
- Pour chaque forme de référence précédemment mémorisée, évaluation du degré de similitude avec les formes formées par les points d'intérêts précédemment extraits et, si ledit degré de similitude est supérieur au seuil prédéfini, alors la reconnaissance d'une marque de séparation sur la page analysée est évaluée positivement.

Avantageusement, le procédé selon l'invention permet ainsi de séparer automatiquement des documents lorsqu'est détectée une marque de séparation dont la forme est similaire à une forme de référence quelle que soit la localisation et la couleur de ladite marque de séparation. Cela permet, par exemple, de traiter facilement et efficacement des lots de documents dont le contenu ne contient pas, antérieurement à l'application des marques de séparation, d'inscription pouvant être détectée, après numérisation, comme une marque de séparation. En particulier, et sans que cela ait un caractère contraignant, le mode de réalisation par détection morphologique est adapté aux lots de documents contenant quasiment exclusivement du texte, les marques de référence et de séparation pouvant alors avoir des formes telles qu'une spirale, un triangle etc.

Cependant, il est des cas où les documents numérisés sont tels que la détection d'une marque de séparation est ardue. Qui plus est, le mode de détection morphologique peut nécessiter des ressources importantes lorsqu'est analysée toute la surface de chacune des pages analysées.

Dans un autre mode de réalisation de l'invention, appelé mode multicritère, les caractéristiques mémorisées à l'étape e) comprennent des caractéristiques dont au moins deux d'un type différent parmi les trois types de caractéristiques suivants : caractéristiques de couleur, caractéristiques de localisation et caractéristiques de forme.

Dans le mode multicritère, la similarité de couleur est évaluée de la même façon que dans le mode de détection chromatique ci-dessus, la similarité de localisation est évaluée de la même façon que dans le mode de détection par localisation ci-dessus et la similarité de forme est évaluée de la même façon que dans le mode de détection morphologique ci-dessus. A insi, à l'étape e), sont mémorisées les caractéristiques de chaque marque de référence détectées et au moins deux desdites caractéristiques sont d'un type différent parmi les trois types de caractéristiques suivants : caractéristiques de couleur, caractéristiques de localisation et caractéristiques de forme.

Dans ce mode de réalisation, la reconnaissance d'une marque de séparation sur une page analysée est fonction de similarités conjuguées des caractéristiques entre une marque de référence précédemment mémorisée et des caractéristiques calculées à partir de ladite page analysée, dont au moins deux caractéristiques d'un type différent. Par exemple et à seule fin d'illustration, des analyses et traitements effectués sur une page analysée à l'étape f) comprennent une mise en correspondance de forme (pattern matching) entre une forme de référence mémorisée à l'étape e) et une forme courante présente sur la page analysée, ladite forme courante étant issue de l'extraction de points d'intérêts sis dans une localisation similaire à une localisation de référence mémorisée à l'étape e). Un autre exemple, sans caractère limitant, est donné quand sont traités par le procédé selon l'invention, dans une page analysée à l'étape f), uniquement les pixels dont la couleur est similaire à la couleur de référence précédemment mémorisée et qui sont sis dans une localisation similaire à une localisation de référence mémorisée à l'étape e), les autres pixels étant ignorés de la représentation numérique de la page analysée en ce qui concerne les traitements et analyses mis en œuvre à l'étape f) par le procédé selon l'invention, lesdits traitements et analyses comprenant le calcul et la comparaison avec un seuil prédéfini de la proportion de pixels dont la couleur est similaire à ladite couleur de référence, ladite proportion étant calculée relativement au nombre total de pixels situés dans ladite localisation de référence. Une autre illustration de ce mode de réalisation est donnée quand des analyses et traitements effectués sur une page analysée à l'étape f) comprennent une mise en correspondance de forme (pattern matching) entre une forme de référence mémorisée à l'étape e) et une forme courante présente sur la page analysée, ladite forme courante étant constituée des pixels dont la couleur est similaire à une couleur de référence mémorisée à l'étape e).

Ainsi, lorsque sont conjuguées des caractéristiques des trois types dans le mode de réalisation multicritère, la détection de la présence d'une marque de séparation sur une page analysée à l'étape f) est effectuée relativement à une proportion de pixels dont la couleur est similaire à la couleur de référence mémorisée à l'étape e), lesdits pixels étant sis dans une localisation similaire à une localisation de référence mémorisée à l'étape e) et lesdits pixels constituants une marque dont la forme est similaire à une forme de référence dont les caractéristiques ont été mémorisées à l'étape e).

Avantageusement, le procédé selon l'invention permet ainsi de séparer automatiquement des documents lorsqu'est détectée une marque de séparation dont la couleur est similaire à la couleur de référence et/ou dont la localisation est similaire à une localisation de référence et/ou dont la forme est similaire à une forme de référence. Cela permet de combiner les avantages des modes de détection chromatique, de localisation et morphologique tout en minimisant le temps et les ressources nécessaire à ladite détection, puisque sont considérés, pour une page analysée, uniquement les pixels dont les caractéristiques sont similaires aux caractéristiques mémorisées à l'étape e), en particulier en ce qui concerne les caractéristiques de couleur et de localisation : ceux-ci permettent en effet d'éliminer de la représentation numérique de la page analysée, rapidement et efficacement, les pixels dont les caractéristiques ne correspondent pas aux caractéristiques précédemment mémorisées. Il devient alors aisé de traiter avec le procédé selon l'invention, de façon rapide et efficace, en particulier relativement aux proportions de faux-positifs et de faux-négatifs, une très grande majorité des documents usuellement sujets à une dématérialisation.

Dans un mode de réalisation de l'invention, à l'étape de séparation f), lorsque la présence d'une marque de séparation a été reconnue, la séparation du document est effectuée d'une manière différente selon la valeur d'un paramètre parmi les deux valeurs possibles suivantes : « les marques de séparation sont systématiquement sur les premières pages des documents », « les marques de séparation sont systématiquement sur les dernières pages des documents ». Ainsi, lorsqu'a été reconnue une page contenant une marque de séparation, si ledit paramètre vaut « les marques de séparation sont systématiquement sur les premières pages des documents » un nouveau document est séparé qui contient toutes les pages précédemment analysées qui n'ont pas été incluses dans un document précédemment séparé, sauf la page analysée couramment. Complémentairement, si ledit paramètre vaut « les marques de séparation sont systématiquement sur les dernières pages des documents » et qu'a été reconnue une page contenant une marque de séparation, un nouveau document est séparé à l'étape f) qui contient toutes les pages précédemment analysées qui n'ont pas été incluses dans un document précédemment séparé, y compris la page analysée couramment.

Ledit paramètre est défini, par exemple et sans que cela ait un caractère contraignant, au moyen d'une variable ou d'une constante dans un programme d'ordinateur mettant en œuvre le procédé selon l'invention.

Avantageusement, cela permet à l'opérateur de placer une marque de séparation ou bien sur la première page de chaque document du lot, ou bien sur la dernière page de chaque document du lot, en fonction de la valeur dudit paramètre. Cela peut s'avérer fort utile lorsque les premières pages (respectivement les dernières pages) des documents d'un même lot, sont telles qu'y placer une marque de séparation est peu aisée, par exemple et sans que cela ait un caractère contraignant, lorsque parmi lesdits documents, certain sont tels que leurs premières pages (respectivement leurs dernières pages), sont intégralement remplies.

Cela étant, l'opérateur, lorsqu'il n'a pas accès à la modification de ce paramètre, doit se conformer à la règle qui découle de sa valeur.

Dans un mode de réalisation résultant du mode précédent, le paramètre est déterminé par la position de la page de calibrage dans le lot de documents, ladite position étant déterminée à l'étape e) : si la page de calibrage est la première page du lot de documents, le paramètre vaut « les marques de séparation sont systématiquement sur les premières pages des documents », et si la page de calibrage est la dernière page du lot de documents, le paramètre vaut « les marques de séparation sont systématiquement sur les dernières pages des documents ».

Avantageusement, l'opérateur de numérisation peut ainsi moduler l'application des marques de séparations sur les documents du lot à numériser, sur les premières pages ou sur les dernières pages de chaque document, en fonction de la position dans laquelle il a inséré la page de calibrage dans le lot de documents : ou bien en l'insérant en tant que première page du lot de document à numériser, pour que le paramètre vaille « les marques de séparation sont systématiquement sur les premières pages des documents », ou bien en l'insérant en tant que dernière page du lot de document à numériser, pour que le paramètre vaille « les marques de séparation sont systématiquement sur les dernières pages des documents ». Cela permet d'adapter la règle de séparation sans nécessiter une quelconque interaction avec une interface homme-machine pour fixer la valeur dudit paramètre.

D'autres architectures peuvent être utilisées pour la mise en œuvre du procédé décrit précédemment sans toutefois sortir du cadre de la présente invention du moment que le système ci-dessus est prévu pour mémoriser et exécuter les instructions du programme d'ordinateur ci-dessus.

Les caractéristiques de l'invention mentionnées ci-dessus, ainsi que d'autres, apparaîtront plus clairement à la lecture de la description suivante d'exemples de réalisation, ladite description étant faite en relation avec les dessins joints, parmi lesquels :

- La **figure** 1 est un ordinogramme illustrant différentes étapes du procédé selon l'invention destiné au traitement d'un lot de documents pour la séparation des différents documents constituant ledit lot.
- La **figure 2a** est un ordinogramme illustrant l'étape e) du procédé selon l'invention dans un exemple typique de réalisation de l'invention.
- La **figure 2b** est un schéma de rectangle servant à illustrer le nommage des angles des rectangles utilisés dans les autres figures.
- La **figure** 3 est un ordinogramme illustrant l'étape f) du procédé selon l'invention dans le même exemple typique de réalisation de l'invention que pour la précédente figure.
- Les **figures 4a, 4b** et **4c** illustrent des exemples pertinents en ce qui concerne les régions de présence prédéfinies des marques de références et de séparation.

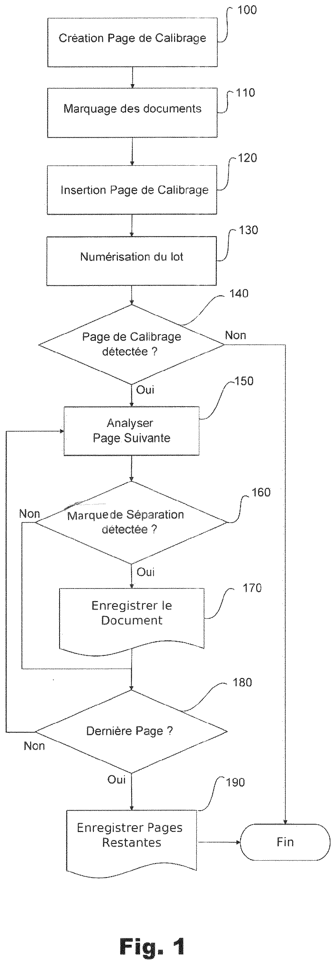

En référence à la **figure** 1 :

- A l'étape 100 : Un opérateur en charge de la numérisation d'un lot de document crée une page de calibrage. A cet effet, l'opérateur applique sur une page, une ou plusieurs marques de référence.
- A l'étape 110 : L'opérateur marque les documents du lot : Il applique, sur une page d'extrémité de chaque document, une marque de séparation. Les caractéristiques de chaque marque de séparation sont similaires à celles d'une des marques de référence de la page de calibrage.
- A l'étape 120 : L'opérateur insère la page de calibrage dans le lot de documents préparés à l'étape 110, ladite page de calibrage étant insérée en tant que première ou que dernière page du lot de documents.
- A l'étape 130 est procédé à la numérisation du lot de documents, ce qui produit des représentations numériques de chaque page dudit lot, lesdites représentations numériques étant des matrices à deux dimensions contenant des pixels.
- A l'étape 140 : Le procédé effectue des traitements afin de déterminer si une page de calibrage est présente dans le lot de documents. Lesdits traitements comprennent la détection de la présence d'au moins une marque de référence sur une des pages d'extrémité et, généralement, des traitements de détection d'éléments permettent de déterminer que la page analysée n'est pas une page de calibrage. Si le procédé détermine qu'une page de calibrage est présente dans le lot de documents, des caractéristiques relatives à chaque marque de référence détectée sont généralement mémorisées à cette étape. Si l'absence de page de calibrage a été détecté à cette étape, le procédé se termine. Les pages numérisées à l'étape 130 sont ainsi traitées usuellement, par exemple enregistrées dans un seul et même fichier, par un autre procédé, comme si le procédé selon l'invention n'avait pas été mis en œuvre.
- A l'étape 150 : La présence d'une page de calibrage a été détecté. Est alors procédé à l'analyse de la page suivante. Si la page de calibrage est la première page du lot, la première exécution de cette étape se fait sur la deuxième page du lot. Si la page de calibrage est la dernière page du lot, la première exécution de cette étape se fait sur la première page du lot et la représentation numérique de la page de calibrage est supprimée de l'ensemble des représentations numériques des pages numérisées du lot de document en cours de traitement par le procédé selon l'invention.
- A l'étape 160 : La reconnaissance d'une marque de séparation est effectuée. Cette reconnaissance met en œuvre, principalement, le calcul de caractéristiques courantes issues de la page analysée et la comparaison desdites caractéristiques courantes avec des caractéristiques issues des marques de référence comprises dans la page de calibrage.

o Si la présence d'une marque de séparation est détectée dans la page couramment analysée, alors le procédé effectue, à l'étape 170, l'enregistrement du document courant, c'est-à-dire de toutes les pages précédemment analysées qui n'ont pas été enregistrées dans un document séparées. Si les pages qui contiennent les marques de séparation sont les premières pages de chacun des documents du lot, un nouveau document est séparé qui contient toutes les pages précédemment analysées qui n'ont pas été incluses dans un document précédemment séparé, sauf la page en cours d'analyse. Si les pages qui contiennent les marques de séparation sont les dernières pages de chacun des documents dudit lot, un nouveau document est séparé qui contient toutes les pages précédemment analysées qui n'ont pas été incluses dans un document précédemment séparé, y compris la page en cours d'analyse.

∘ Si la présence d'une marque de séparation n'est pas détectée dans la page couramment analysée, alors le procédé effectue, à l'étape 180, un test afin de déterminer si la page en cours d'analyse est la dernière page du lot.

■ Si la page en cours d'analyse n'est pas la dernière page du lot, l'étape 150 est exécutée comme ci-dessus.
■ Si la page en cours d'analyse est la dernière page du lot, il est alors procédé, lors de l'étape 190, à l'enregistrement des pages restantes dans un document séparé. Cela permet, dans le cas où les pages contenant les marques de séparation sont les dernières pages de chaque du document du lot, de traiter le cas où une marque de séparation n'est pas présente sur la dernière page du dernier document du lot. Si le nombre de pages restantes à l'étape 190 est nul, cela signifie que la dernière page du dernier document du lot a été reconnue comme contenant une marque de séparation et que, par conséquent, le document correspondant a été enregistré lors de la précédente itération de l'étape 170 et, dans ce cas précis, il n'est procédé à l'enregistrement d'aucune page à l'étape 190.

Les étapes 100, 110, et 120 peuvent être mises en œuvre par un seul et même utilisateur/opérateur. En variante chaque étape 100, 110 ou 120 peut être mise en œuvre par un utilisateur distinct. Ce qui est essentiel ici conformément à l'invention et que l'on ne retrouve dans aucune méthode de l'art antérieur est le fait que la marque de référence est choisie librement par l'utilisateur, sans aucun a priori, relation, connaissance ou maîtrise d'un système informatique ou de numérisation particulier. De même, il est à noter que la page de calibrage n'est pas une page de séparation mais simplement une page sur laquelle figure une marque de référence dont les propriétés sont librement choisies par l'utilisateur sans aucune contrainte technique préalable vis-à-vis du système de traitement. Il est à noter aussi que la marque de séparation n'est pas non plus une page de séparation mais une marque librement choisie par un utilisateur avec des propriétés similaires à celles de la marque de référence. Ainsi, les caractéristiques/propriétés relatives à la marque de référence figurant sur la page de calibrage sont totalement indéterminées avant la première étape a) du procédé. Il en résulte une grande souplesse d'utilisation du système de traitement conforme à l'invention par un utilisateur/opérateur non expert en informatique.

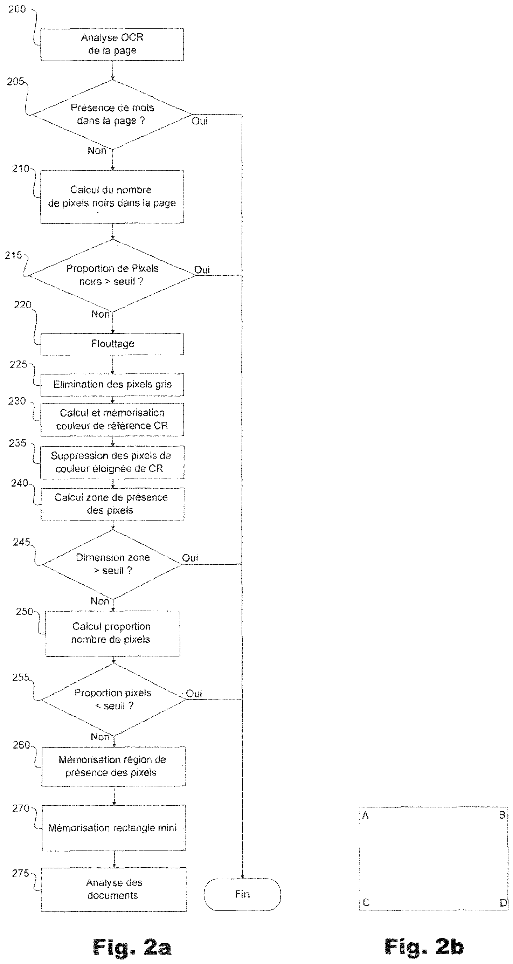

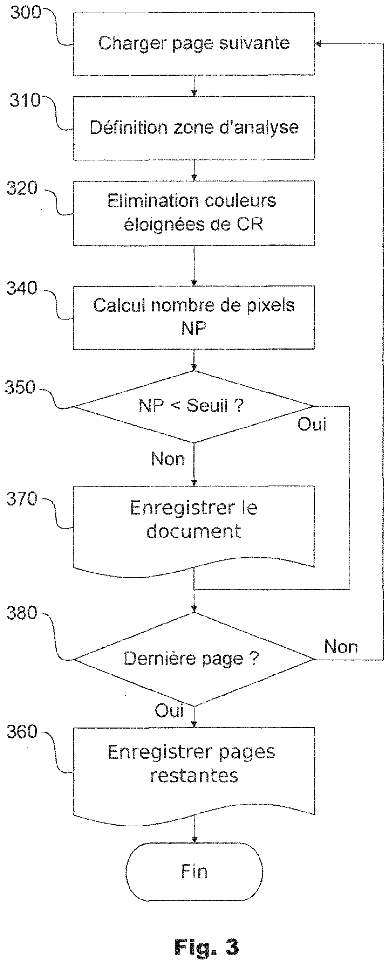

En référence aux **figures 2a, 2b** et 3 :
Ces figures sont relatives à une réalisation de la présente invention pour laquelle :

• la page de calibrage contient une seule marque de référence,
• les marques de séparations sont reconnues en fonction de leur couleur et de leur localisation,
• les marques de séparation des documents sont appliquées sur les premières pages de chaque document.

En référence à la **figure 2a :**
Cette figure illustre certaines des étapes typiques mises en œuvre lors de l'analyse d'une page d'extrémité du lot de documents numérisés afin de déterminer si la page analysée est une page de calibrage et, si elle l'est, de déterminer et de mémoriser les caractéristiques de la marque de référence qui s'y trouve.

A l'étape 200, il est procédé à l'analyse OCR (Optical Character Reading) de la page analysée.

A l'étape 205 : Si des mots ont été détectés dans la page analysée, il est considéré que cette page n'est pas une page de calibrage et le processus est inhibé. En effet, dans l'implémentation de l'exemple illustré par cette figure, la page de calibrage doit être vierge de toute inscription, sauf une marque de référence, de couleur non similaire aux gris.

A l'étape 210, il est procédé au comptage du nombre de pixels noirs (c'est-à-dire dont la couleur est proche de la couleur noire) dans la page analysée.

A l'étape 215, la proportion des pixels noirs est comparée avec un seuil prédéfini. Ladite proportion est calculée par rapport au nombre total de pixel de la représentation numérique de la page analysée. Si ladite proportion est supérieure audit seuil, il est considéré que cette page n'est pas une page de calibrage et le processus est inhibé. En effet, dans l'implémentation de l'exemple illustré par cette figure, la page de calibrage doit être la représentation numérique d'une page vierge à l'exception de la présence d'une marque de référence dont la couleur n'est pas similaire à un gris (la couleur noire étant un des extrêmes de la gamme des gris).

A l'étape 220, il est procédé au floutage (par ailleurs aussi appelé lissage) de la page analysée de façon à atténuer l'importance des pixels isolés dont la couleur n'est pas similaire à la couleur blanche. Ce peut être, par exemple et sans que cela soit limitant, un algorithme de flou gaussien ou un algorithme moyenneur 3x3. Ainsi, les pixels isolés dont la couleur n'est pas similaire à la couleur blanche mais qui sont entourés d'une majorité de pixels dont la couleur est similaire à la couleur blanche se voient modifiés de façon à ce que la couleur qui leur est associée soit similaire à la couleur blanche. L'application d'un algorithme de lissage permet de même d'éviter que ne soient détectés sur la page analysée des pixels isolés ou peu nombreux dont la couleur est similaire à la couleur de référence, réduisant ainsi drastiquement le risque de faux positifs.

A l'étape 225, il est procédé à l'élimination des pixels dont la couleur est similaire à une couleur de la gamme des gris (noirs et blancs y compris). Ladite élimination s'effectuant, par exemple et de manière nullement contraignante, par l'attribution auxdits pixels éliminés d'une caractéristique de transparence totale dans une représentation d'image de type PNG.

A l'étape 230, il est procédé au calcul de la couleur moyenne de référence CR des pixels non éliminés dans la représentation numérique de la page analysée.

A l'étape 235, il est procédé à l'élimination des pixels dont la couleur n'est pas similaire à la couleur de référence CR. Cela permet, dans les étapes ultérieures, de considérer quasiment uniquement les pixels qui correspondent à la marque de référence et de minimiser l'influence des aléas de la numérisation sur l'efficacité du procédé.

A l'étape 240, il est procédé à un calcul de la zone de présence des pixels restant dans la représentation numérique de la page analysée. Cela peut se faire, par exemple, en utilisant une méthode d'évaluation du rectangle à limite minimum (minimum bounding rectangle) qui inclut tous les pixels restants.

A l'étape 245, il est procédé au calcul de la dimension de la zone de présence calculée à l'étape précédente, puis à la comparaison de ladite dimension avec un seuil prédéfini. Ladite dimension est généralement calculée en termes de proportion par rapport à la dimension de la page analysée (une dimension de 100% signifie alors que la zone a la même dimension que la page analysée, et une dimension de 20% signifie que la zone occupe 1/5 de la page analysée). Si ladite dimension est supérieure audit seuil prédéfini, il est considéré que la page analysée n'est pas une page de calibrage et le processus est inhibé. En effet, dans l'implémentation de l'exemple illustré par cette figure, la marque de référence doit être circonscrite dans une zone relativement compacte et peu étendue sur la page de calibrage, de façon à ce que ses caractéristiques de localisation sont suffisamment précises.

A l'étape 250 il est procédé au calcul de la proportion du nombre de pixels restants par rapport au nombre de pixel total de la représentation numérique de la page analysée.

A l'étape 255, il est procédé à la comparaison de la proportion calculée à l'étape précédente avec un seuil prédéfini. Si ladite proportion est inférieure audit seuil, il est considéré que la page analysée n'est pas une page de calibrage et le processus est inhibé. En effet, dans l'implémentation de l'exemple illustré par cette figure, la marque de référence doit être suffisamment significative et une proportion trop faible de pixels significatifs ne permet pas de déterminer des caractéristiques suffisantes pour les détections ultérieures.

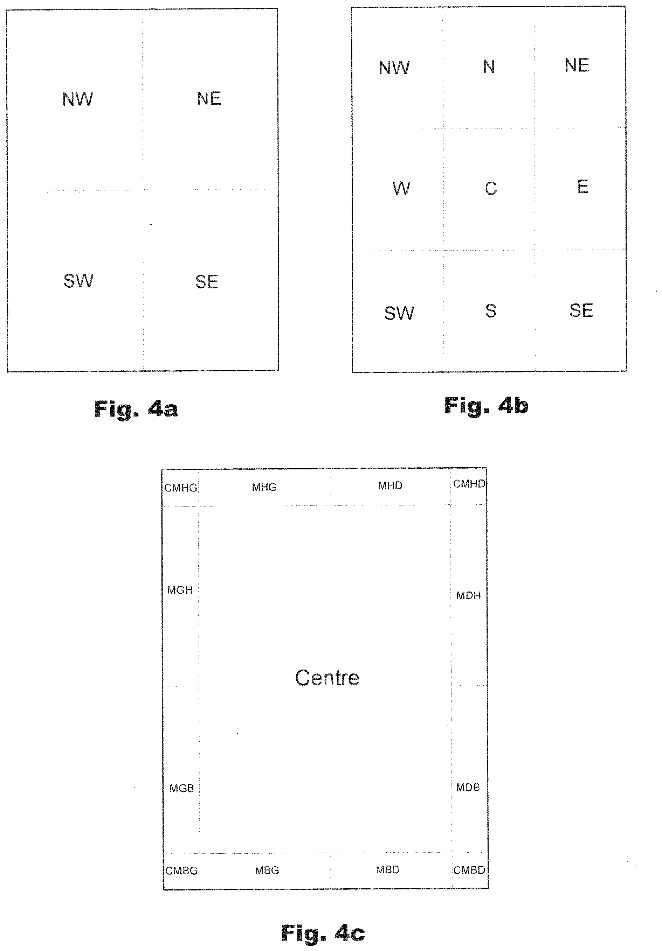

A l'étape 260, il est procédé à la détection puis à la mémorisation de la ou des région(s) de présence des pixels restants. Il s'agit d'une première caractéristique de localisation qui concerne la ou les région(s), parmi un ensemble prédéfini de régions, dans laquelle (lesquelles) se trouve(nt) la marque de référence. Des exemples de régions prédéfinies sont donnés aux figures 4a, 4b et 4c.

A l'étape 270, il est procédé à la détection puis à la mémorisation de la zone de référence, c'est à dire le rectangle minimal qui contient tous les pixels de la marque de référence. Dans cet exemple de réalisation, c'est en termes de coordonnées relatives (pourcentages) par rapport à l'angle haut gauche de la région de présence que sont enregistrées les coordonnées des quatre angles dudit rectangle minimal. Ainsi, il est possible de caractériser de façon plus fine la localisation de la marque de référence dans la région de présence.

L'étape 275 correspond à l'étape 150 de la figure 1 : le procédé analyse maintenant les pages du lot de documents de façon à y détecter celles des pages qui contiennent une marque de séparation.

En référence à la **figure 2b** :
Cette figure illustre les conventions de nommage des rectangles et zones rectangulaires utilisées par ailleurs. L'angle A est l'angle haut gauche, l'angle B l'angle haut droit, l'angle C l'angle bas gauche et l'angle D l'angle bas droit. En outre, cette figure permet d'illustrer par l'exemple le système de coordonnées proportionnelles utilisé dans l'exemple de réalisation que les figures 2a et 3 illustrent. Dans ce système, A a pour coordonnées (0,0), B (100,0), C (0,100) et D (100,100) et l'intersection des segments [AD] et [BC] a pour coordonnées (50,50).

En référence à la **figure 3** :
Cette figure illustre, dans le cas de la même réalisation de la présente invention que pour la figure 2a, certaines des étapes typiques mises en œuvre lors de l'analyse d'une page du lot de documents numérisés afin de déterminer si la page analysée est une page de séparation.

A l'étape 300, la page suivante du lot de documents est chargée par le procédé. Ce chargement prend généralement la forme d'une copie, temporaire, de la représentation numérique de la page analysée, cela afin de rendre possible des modifications substantielles de ladite représentation numérique visant la reconnaissance de la présence d'une marque de séparation sur ladite page. L'intégralité des traitements et analyses sont ensuite effectués sur cette copie. Avantageusement, lorsque la page doit être enregistrée au sein d'un fichier de document, c'est la représentation numérique originale et non pas la copie, généralement modifiée, qui sert de source à l'enregistrement. Lors de la première itération de cette étape 300, c'est la première page du premier document du lot qui est chargée. L'étape précédente à la présente étape 300 est, dans l'exemple de réalisation qui sert de base aux figures 2a et 3, l'étape 270.

A l'étape 310, il est procédé à la définition de la zone d'analyse dans la représentation numérique de la page analysée. Cette zone est évaluée à partir du rectangle minimal dont les coordonnées précédemment calculées et mémorisées à l'étape 270 sont les points A, B, C et D tels que l'illustre la figure 2b, dont les coordonnées respectives sont $(a_x,a_y),(b_x,b_y),(c_x,c_y)$ et $(d_x,d_y)$ dans un système de coordonnées proportionnelles tel que celui décrit en relation avec la figure 2b : la zone d'analyse est le rectangle formé par les points de coordonnées $(max(a_x-t_{x,},0),max(a_y-t_y,0))$, $(min(b_x+t_x,100),max(0,b_y-t_y))$, $(max(0,c_x-t_x),min(100,c_y+t_y))$ et $(min(100,d_x+t_{x)},min(100,d_y+t_y))$, avec $t_x$ et $t_y$ qui sont des taux d'agrandissement respectivement horizontaux et verticaux et max et min qui sont les fonctions de maximum et minimum. La zone d'analyse englobe ainsi la zone de référence précédemment mémorisée (et est souvent centrée sur ladite zone de référence), et est sensiblement plus étendue que ladite zone de référence, ce qui permet de détecter des marques de séparation qui sont situées dans des zones similaires à la zone de référence mais pas strictement égales ni incluses dans la zone de référence. Les pixels qui ne sont pas localisés dans la zone d'analyse sont éliminés de la représentation numérique de la page analysée précédemment chargée.

A l'étape 320, il est procédé à l'élimination dans la zone d'analyse des pixels dont la couleur est éloignée de la couleur de référence CR mémorisée à l'étape 230. Ainsi, seront pris en compte dans les étapes ultérieures uniquement les pixels dont la couleur est similaire à la couleur de référence.

A l'étape 340, il est procédé au calcul du nombre NP de pixels qui restent dans la zone d'analyse. Ce nombre est exprimé sous forme de proportion : il s'agit du nombre de pixels restants sur le nombre de pixels que peut contenir la zone d'analyse. Il est ainsi possible de traiter des pages de dimensions différentes et/ou produisant des représentations numériques de résolutions différentes.

A l'étape 350, il est procédé à la comparaison de NP avec un seuil prédéfini. Si NP est inférieur audit seuil, il est considéré que la page analysée ne contient pas de marque de séparation et, subséquemment, le procédé analyse la page suivante du document sauf si la page analysée est la dernière page du lot de documents. Si NP est supérieur audit seuil, cela indique qu'est significatif le nombre de pixels dont la couleur est similaire à la couleur de référence et qui sont situés dans la zone d'analyse, c'est-à-dire que leur localisation est similaire à la localisation des pixels de la marque de référence, ce qui revient à dire que la présence d'une marque de séparation a été détectée.

A l'étape 370, une marque de séparation a été détectée et, subséquemment, un document est enregistré dans un fichier séparé qui contient toutes les pages du lot de documents qui n'ont pas déjà été enregistrées à l'exception de la page en cours d'analyse, car ladite page en cours d'analyse est la première page du document suivant.

A l'étape 380, la position de la page analysée dans le lot de documents est analysée. Si ladite page analysée, n'est pas la dernière page du lot de documents, alors l'étape 300 est instanciée.

Sinon, l'étape 360 est exécutée : un document est enregistré dans un fichier séparé qui contient toutes les pages du lot de documents qui n'ont pas déjà été enregistrées y compris la page en cours d'analyse. En référence à la **figure 4a :**

Cette figure illustre un exemple de répartition de régions de présence des marques de référence et de séparation. Dans cet exemple, les pages analysées contiennent 4 régions de présence de même taille nommées selon leurs positions cardinales : NW : Nord-Ouest, NE : Nord-Est, SW : Sud-Ouest et SE : Sud-Est.

En référence à la **figure 4b** :

Cette figure illustre un exemple de répartition de régions de présence des marques de référence et de séparation. Dans cet exemple, les pages analysées contiennent 9 régions de présence de même taille nommées selon leurs positions cardinales : NW : Nord-Ouest, N : Nord, NE : Nord-Est, W : Ouest, C : Centre, E : Est, SW : Sud-Ouest, S : Sud, SE : Sud-Est.

En référence à la **figure 4c** :

Cette figure illustre un exemple de répartition de régions de présence des marques de référence et de séparation. Dans cet exemple, les pages analysées contiennent 13 zones de tailles disparates, nommées selon des caractéristiques typographiques : CMHG : « coin de marges haut-gauche », MHG :« marge haute gauche », MHD :« marge haute droite », CMHD :« coin de marges haut-droit », MDH :« marge droite haute », MDB :« marge droite basse », CMBD :« coin de marges bas-droit », MBD :« marge basse droite », MBG :« marge basse gauche », CMBG :« coin de marges bas-gauche », MGB :« marge gauche basse », MGH :« marge gauche haute », C :« hors marge (centre) ».

Grâce à la présente invention, on utilise avantageusement les capacités d'analyse et de traitement qu'ont les ordinateurs en ce qui concerne les représentations numériques de pages de documents dématérialisés afin de numériser en une seule passe des lots de documents contenant potentiellement de très nombreuses pages tout en récupérant à l'issue du procédé un fichier informatique par document numérisé.

Bien entendu, la présente invention ne se limite pas aux exemples de réalisation ci-dessus ; elle s'étend à d'autres variantes.

Le procédé selon l'invention peut être mis en œuvre sur un ou plusieurs ordinateurs d'usage général, sur un ou des ordinateurs d'usage spécial par exemple un ordinateur serveur, sur un microprocesseur ou un microcontrôleur programmé avec des éléments de circuits périphériques intégrés, sur un circuit ASIC ou tout autre circuit intégré, sur un processeur numérique du signal, sur une électronique câblée ou un circuit logique tel qu'un circuit à éléments discrets, sur un composant logique programmable tel qu'un circuit PLO, PLA, FPGA, une unité centrale de carte graphique (GPU), ou un circuit PAL ou autre. En général, tout dispositif capable de mettre en œuvre une machine d'états finis qui peut à son tour mettre en œuvre l'organigramme représenté sur la figure 1, peut être utilisé pour mettre en œuvre le procédé selon l'invention permettant de séparer des documents d'un même lot de pages numérisées.

Ainsi, par exemple on tient compte dans l'exemple de réalisation présenté ci-avant à la fois de la couleur et de la localisation d'une marque de référence et des marques de séparation. Néanmoins, on comprendra que l'une au moins des caractéristiques de couleur, de localisation ou de morphologie convient déjà à elle seule pour décider de la séparation d'un document dans un lot de documents numérisés au sens de l'invention.

En pratique le procédé conforme à l'invention peut être mis en œuvre par un dispositif de numérisation de pages configuré pour numériser en une seule passe des lots de plusieurs pages.

Par exemple le dispositif de numérisation comprend un processeur (non représenté) et des modules de mémoire (non représentés) configurés respectivement pour enregistrer une image numérisée ; pour enregistrer une pluralité d'images numérisées ; pour enregistrer des caractéristiques de couleur et/ou de position et/ou de forme d'une marque de référence appliquée sur une page de calibrage ou d'une marque de séparation appliquée sur une page choisie et pour enregistrer des instructions destinées à être exécutées par ledit processeur. Lesdites instructions ainsi mémorisées sont exécutées par le processeur pour respectivement détecter la présence d'une page de calibrage, contenant une ou plusieurs marques de référence, dans un lot de pages numérisées en une seule passe, pour comparer entre elles les caractéristiques d'une marque de référence et d'une marque de séparation ainsi mémorisée, pour déterminer si lesdites marques de référence et de séparation possèdent des caractéristiques de couleur et/ou de position et/ou de forme similaires ; et pour enregistrer un sousensemble de pages numérisées d'un lot de pages numérisées en une seule passe.

### Revendications

1. Procédé de traitement d'un lot de documents comprenant les étapes suivantes :

   - numériser (130) le lot de documents préalablement préparé par l'ajout (120) d'une page de calibrage à l'une des extrémités du lot de documents à traiter, de façon à ce que la page de calibrage soit l'une des pages d'extrémité du lot, ladite page de calibrage étant vierge de toute inscription, et sur laquelle est appliquée manuellement par un utilisateur, au moins une marque de référence de caractéristiques de couleur, de localisation, et/ou de forme librement choisies par l'utilisateur, et dont la couleur n'appartient pas à la gamme des gris, et par l'application d'au moins une marque de séparation dont les propriétés sont similaires à celles de la marque de référence appliquée sur la page de calibrage, ladite marque de séparation étant appliquée manuellement par l'utilisateur sur une page d'extrémité de chaque document du lot à traiter ;
   - postérieurement à la numérisation de la première page du lot de documents à traiter, détecter (140) la présence/absence de la page de calibrage par analyse et calcul des caractéristiques courantes comprenant la proportion, la répartition et la couleur des pixels de la première page ainsi numérisée, la présence de la page de calibrage étant détectée lorsque sa représentation numérique correspond à une page vierge comprenant une marque de référence, de caractéristiques choisies dont la couleur n'appartient pas à la gamme des gris;
   - en cas de présence de la page de calibrage (150), lisser la représentation numérique de la page de calibrage de façon à atténuer l'importance des pixels isolés dont la couleur n'est pas similaire à la couleur blanche, puis éliminer les pixels dont la couleur est comprise dans la gamme des gris, noir et blanc ;
   - mémoriser les propriétés choisies des pixels non éliminés correspondant à la marque de référence ;
   - postérieurement à la numérisation des autres pages du lot à traiter, analyser et calculer les caractéristiques courantes des représentations numériques de chaque page, et comparer (160) la similarité desdites caractéristiques courantes ainsi calculées, avec les caractéristiques choisies par l'utilisateur issues de la marque de référence appliquée sur la page de calibrage ; et
   - en cas de similarité positive, séparer le document du lot en fonction de la marque de séparation ainsi reconnue, et enregistrer le document courant (170) comprenant toutes les pages précédemment analysées qui n'ont pas été enregistrées dans un document séparé.

2. Procédé selon la revendication 1, **caractérisé en ce que** la page de calibrage contient au moins une marque de référence d'une couleur de référence choisie par l'utilisateur, et **en ce que** chaque marque de séparation est d'une couleur similaire à la couleur de référence, et **en ce que** l'étape de mémorisation comprend le calcul et la mémorisation de la couleur de référence (CR) des pixels colorés de la (des) marque(s) de référence, et **en ce que** la reconnaissance de la marque de séparation lors de l'étape de comparaison (160) est positive si la proportion des pixels dont la couleur est similaire à la couleur de référence (CR) précédemment mémorisée est supérieure à un seuil prédéfini.

3. Procédé selon la revendication 1 **caractérisé en ce que** l'étape de mémorisation comprend le calcul et la mémorisation d'une localisation de référence de chaque marque de référence et **en ce que** l'étape de comparaison (160) est positive si ladite marque de séparation est localisée similairement à la localisation de référence précédemment mémorisée.

4. Procédé selon la revendication 1 **caractérisé en ce que** l'étape de mémorisation comprend le calcul et la mémorisation de la forme de référence de chaque marque de référence, et **en ce que** dans l'étape de comparaison, la reconnaissance de la marque de séparation est positive si une forme courante constituée de pixels présents sur la page analysée est similaire à une forme de référence précédemment mémorisée.

5. Procédé selon l'une des revendications précédentes, **caractérisé en ce que** dans l'étape de comparaison (160), la reconnaissance d'une marque de séparation de documents est positive si des similarités conjuguées de couleur et/ou de localisation et/ou de forme d'une marque de séparation sont similaires avec la couleur et/ou de localisation et/ou de forme conjuguées d'une des marques de référence.

6. Procédé selon l'une des revendications 1 à 5, **caractérisé en ce que** l'étape de séparation est fonction d'un paramètre détecté dont la valeur appartient au groupe formé par « les marques de séparation sont systématiquement sur les premières pages des documents », « les marques de séparation sont systématiquement sur les dernières pages des documents ».

7. Procédé selon la revendication 6, **caractérisé en ce que** l'étape d'enregistrement est fonction du paramètre détecté, la page de calibrage étant la première page du lot de documents si le paramètre est « les marques de séparation sont systématiquement sur les premières pages des documents », et si la page de calibrage est la dernière page du lot de documents, le paramètre est « les marques de séparation sont systématiquement sur les dernières pages des documents ».

8. Procédé selon l'une des revendications 1 à 7, **caractérisé en ce que** la marque de référence comprend des caractéristiques différentes d'un lot à l'autre.

**Patentansprüche**

1. Verfahren zur Verarbeitung eines Dokumentenstapels, das die folgenden Schritte umfasst:

- das Scannen (130) des Dokumentenstapels, der durch vorheriges Hinzufügen (120) einer Kalibrierungsseite am Anfang oder Ende des zu verarbeitenden Dokumentenstapels vorbereitet wurde, so dass die Kalibrierungsseite die erste oder letzte Seite des Stapels ist, wobei die Kalibrierungsseite unbeschriftet ist und von einem Benutzer manuell mit mindestens einer frei ausgewählten Referenzmarke mit bestimmten Merkmalen in Bezug auf Farbe, Lokalisierung und/oder Form darauf versehen ist, wobei die Farbe nicht zu den Grautönen gehört, sowie durch das Anbringen mindestens einer Trennmarke, deren Merkmale ähnlich der Merkmale der auf der Kalibrierungsseite angebrachten Referenzmarke sind, wobei die Trennmarke vom Benutzer manuell auf einer ersten oder letzten Seite jedes Dokument des zu verarbeitenden Stapels angebracht wird;
- nach dem Scannen der ersten Seite des zu verarbeitenden Dokumentenstapels das Erkennen (140) des Vorhandenseins/Fehlens der Kalibrierungsseite durch Analyse und Berechnung der aktuellen Merkmale, die den Anteil, die Verteilung und die Farbe der Pixel der so gescannten ersten Seite umfassen, wobei das Vorhandensein der Kalibrierungsseite erkannt wird, wenn ihre gescannte Darstellung einer Leerseite mit Referenzmarke mit ausgewählten Merkmalen entspricht, wobei die Farbe nicht zu den Grautönen gehört;
- bei Vorhandensein der Kalibrierungsseite (150) das Glätten der gescannten Darstellung der Kalibrierungsseite, so dass die Intensität einzelner Pixel, deren Farbe nicht der Farbe Weiß gleicht, abgeschwächt wird, und das Entfernen der Pixel, deren Farbe in den Bereich der Grau-, Schwarz- und Weißtöne fällt;
- Speichern der ausgewählten Merkmale der nicht beseitigten Pixel, die der Referenzmarke entsprechen;
- nach dem Scannen der anderen Seiten des zu verarbeitenden Stapels das Analysieren und Berechnen der aktuellen Merkmale der gescannten Darstellungen jeder Seite und das Vergleichen (160) der so berechneten aktuellen Merkmale mit den vom Benutzer gewählten Merkmalen der auf der Kalibrierungsseite angebrachten Referenzmarke auf ihre Gleichheit hin; und

- im Falle einer positiven Gleichheit das Trennen des Dokuments vom Stapel entsprechend der so erkannten Trennmarke und das Speichern des aktuellen Dokuments (170) mit allen zuvor analysierten Seiten, die nicht in einem separaten Dokument gespeichert worden waren.

**2.** Verfahren nach Anspruch 1, **dadurch gekennzeichnet, dass** die Kalibrierungsseite mindestens eine Referenzmarke einer vom Benutzer ausgewählten Referenzfarbe enthält, und dadurch, dass jede Trennmarke eine ähnliche Farbe wie die Referenzfarbe hat, und der Schritt der Speicherung die Berechnung und Speicherung der Referenzfarbe (CR) der farbigen Pixel der Referenzmarke(n) umfasst, und dadurch, dass die Erkennung der Trennmarke im Schritt des Vergleichens (160) positiv ist, wenn der Anteil der Pixel, deren Farbe ähnlich der zuvor gespeicherten Referenzfarbe (CR) ist, über einem vordefinierten Schwellenwert liegt.

**3.** Verfahren nach Anspruch 1, **dadurch gekennzeichnet, dass** der Schritt der Speicherung die Berechnung und Speicherung eines Referenzlokalisierung jeder Referenzmarke umfasst und der Schritt des Vergleichens (160) positiv ist, wenn die Trennmarke ähnlich lokalisiert wird, wie die zuvor gespeicherte Referenzlokalisierung.

**4.** Verfahren nach Anspruch 1, **dadurch gekennzeichnet, dass** der Schritt der Speicherung die Berechnung und Speicherung der Referenzform jeder Referenzmarke umfasst, und im Schritt des Vergleichens die Erkennung der Trennmarke positiv ist, wenn eine aktuelle Form bestehend aus Pixeln, die auf der analysierten Seite vorhanden sind, einer zuvor gespeicherten Bezugsform gleichen.

**5.** Verfahren nach einem der vorhergehenden Ansprüche, **dadurch gekennzeichnet, dass** eine Dokumententrennmarke im Schritt des Vergleichens (160) erkannt wird, wenn Ähnlichkeiten zwischen Farbe und/oder Lokalisierung und/oder Form einer Trennmarke in ihrer Gesamtheit und der Farbe und/oder der Lokalisierung und/oder der Form einer der Referenzmarken in ihrer Gesamtheit vorhanden sind.

**6.** Verfahren nach einem der Ansprüche 1 bis 5, **dadurch gekennzeichnet, dass** der Schritt der Trennung von einem erkannten Parameter abhängt, dessen Wert zu der Gruppe bestehend aus "Die Trennmarken befinden sich systematisch auf den ersten Seiten der Dokumente", "Die Trennmarken befinden sich systematisch auf den letzten Seiten der Dokumente" gehört.

**7.** Verfahren nach Anspruch 6, **dadurch gekennzeichnet, dass** der Schritt der Speicherung von dem erkannten Parameter abhängt, wobei die Kalibrierungsseite die erste Seite des Dokumentenstapels ist, wenn der Parameter "Die Trennmarken befinden sich systematisch auf den ersten Seiten der Dokumente" ist, und die Kalibrierungsseite die letzte Seite des Dokumentenstapels ist, wenn der Parameter "Die Trennmarken befinden sich systematisch auf den letzten Seiten der Dokumente" ist.

**8.** Verfahren nach einem der Ansprüche 1 bis 7, **dadurch gekennzeichnet, dass** die Referenzmarke von Stapel zu Stapel unterschiedliche Merkmale umfasst.

**Claims**

**1.** A method for processing a batch of documents, comprising the following steps:

- digitising (130) the batch of documents previously prepared by addition (120) of a calibration page to one of the ends of the batch of documents to be processed, so that the calibration page is one of the end pages of the batch, wherein said calibration page is free of any writing, and to which is manually applied by a user at least one reference mark of colour, location and/or shape characteristics freely chosen by the user, the colour of which does not belong to the grey range, and by application of at least one separation mark the properties of which are similar to those of the reference mark applied to the calibration page, wherein said separation mark is applied manually by the user to an end page of each document of the batch to be processed;

- after scanning the first page of the batch of documents to be processed, detecting (140) the presence/absence of the calibration page by analysing and calculating the current characteristics comprising the proportion, distribution and colour of the pixels of the first page thus scanned, wherein the presence of the calibration page is detected when its digital representation corresponds to a blank page comprising a reference mark, of chosen characteristics, the colour of which does not belong to the grey range;

- if the calibration page (150) is present, smoothing the digital representation of the calibration page so as to reduce the significance of single pixels, the colour of which is not similar to white, and subsequently eliminating pixels, the colour of which is in the grey, black and white range;

- memorising the chosen properties of the non-removed pixels corresponding to the reference mark;

- after scanning the other pages of the batch to be processed, analysing and calculating the current characteristics of the digital representations of each page, and comparing (160) the similarity of said current characteristics thus calculated with the characteristics chosen by the user from the reference mark applied to the calibration page; and

- in case of positive similarity, separating the document from the batch according to the separation mark thus recognised, and saving the current document (170) comprising all the previously analysed pages that have not been saved in a separate document.

2. Method according to claim 1, **characterised in that** the calibration page contains at least one reference mark of a reference colour chosen by the user, and that each separation mark is of a similar colour to the reference colour, and **in that** the memorisation step comprises calculating and memorising the reference colour (RC) of the coloured pixels of the reference mark(s), and **in that** the recognition of the separation mark during the comparison step (160) is positive if the proportion of pixels, the colour of which is similar to the previously memorised reference colour (RC) is greater than a predefined threshold.

3. Method according to claim 1, **characterised in that** the memorisation step comprises calculating and memorising a reference location of each reference mark and **in that** the comparison step (160) is positive if said separation mark is located similar to the previously memorised reference location.

4. Method according to claim 1, **characterised in that** the memorisation step comprises calculating and memorising the reference shape of each reference mark, and **in that** in the comparison step, recognition of the separation mark is positive if a current shape consisting of pixels present on the page being analysed is similar to a previously memorised reference shape.

5. Method according to any of the preceding claims, **characterised in that** during the comparison step (160), recognition of a document separation mark is positive if conjugate similarities of colour and/or location and/or shape of a separation mark are similar to the conjugate colour and/or location and/or shape of one of the reference marks.

6. Method according to any of claims 1 to 5, **characterised in that** the separation step is a function of a detected parameter, the value of which belongs to the group formed by "the separation marks are systematically on the first pages of the documents", "the separation marks are systematically on the last pages of the documents".

7. Method according to claim 6, **characterised in that** the recording step is a function of the detected parameter, the calibration page being the first page of the batch of documents if the parameter is "the separation marks are systematically on the first pages of the documents", and if the calibration page is the last page of the batch of documents, the parameter is "the separation marks are systematically on the last pages of the documents".

8. Method according to any of claims 1 to 7, **characterised in that** the reference mark comprises different characteristics from batch to batch.

**Fig. 1**

200 — Analyse OCR
de la page

205 — Présence de mots
dans la page ? — Oui

Non

210 — Calcul du nombre
de pixels noirs dans la page

215 — Proportion de Pixels
noirs > seuil ? — Oui

Non

220 — Flouttage

225 — Elimination des pixels gris

230 — Calcul et mémorisation
couleur de référence CR

235 — Suppression des pixels de
couleur éloignée de CR

240 — Calcul zone de présence
des pixels

245 — Dimension zone
> seuil ? — Oui

Non

250 — Calcul proportion
nombre de pixels

255 — Proportion pixels
< seuil ? — Oui

Non

260 — Mémorisation région de
présence des pixels

270 — Mémorisation rectangle mini

275 — Analyse des
documents

Fin

**Fig. 2a**

A    B



C    D

**Fig. 2b**

25

300 — Charger page suivante

310 — Définition zone d'analyse

320 — Elimination couleurs éloignées de CR

340 — Calcul nombre de pixels NP

350 — NP < Seuil ?

Oui

Non

370 — Enregistrer le document

380 — Dernière page ?

Non

Oui

360 — Enregistrer pages restantes

Fin

**Fig. 3**

| | |
|---|---|
| NW | NE |
| SW | SE |

**Fig. 4a**

| | | |
|---|---|---|
| NW | N | NE |
| W | C | E |
| SW | S | SE |

**Fig. 4b**

| CMHG | MHG | MHD | CMHD |
|---|---|---|---|
| MGH | | | MDH |
| | Centre | | |
| MGB | | | MDB |
| CMBG | MBG | MBD | CMBD |

**Fig. 4c**